# EUROPEAN PATENT SPECIFICATION

(11) **EP 0 470 320 B1**
(45) Date of publication and mention of the grant of the patent: **11.01.1995**
(21) Application number: 90480114.9
(22) Date of filing: 10.08.1990
(51) Int. Cl.: H04L 29/06, H04L 1/16

(54) **Mechanism for performing the steady state and error recovery functions of a communication protocol**
Mechanismus zum Ausführen des stationären Betriebszustands und der Fehlerbeseitungsfunktionen eines Kommunikationsprotokolls
Mécanisme pour réaliser les fonctions de l'état stationnaire et de réparations d'erreur d'un protocole de communication

(43) Date of publication of application: 12.02.1992
(73) Proprietor: International Business Machines Corporation, Armonk, N.Y. 10504 (US)
(72) Inventor: Beaulieu, Cesca Joseph, F-06480 La Colle sur Loup (FR); Calvignac, Jean Louis, F-06610 La Gaude (FR); Millet, Jean-Marc, F-06140 Vence (FR); Naudin, Bernard, F-06700 Saint Laurent du Var (FR)
(74) Representative: Lattard, Nicole

(56) References cited:
- EP-A- 0 304 074
- EP-A- 0 310 360
- US-A- 4 527 267

## Description

### Field of the invention

The present invention relates to a mechanism for performing the initialization, the steady state functions and the error recovery procedures of a communication protocol managing the message transfers between units of a communication node.

### Background art

The data link control DLC functions of communication protocols such as the High level Data link Control protocols (HDLC) which are synchronous protocols managing the transmission of messages in frames having a standard format, are generally split between functions which are performed by hardware and functions which are performed by software.

The data link control functions mainly comprise the detection of the frame synchronization flag, the zero insertion and deletion and the computation and checking of the Frame Check Sequence FCS, the sequencing functions the supervisory link functions, and the retry functions.

The limit between the functions implemented in hardware and the functions implemented in software have never been placed beyond the FCS generation and checking. The sequencing functions, supervisory link functions and the retry functions are generally performed by software because software offers more flexibility.

However, when the transmission of messages is performed through a high speed link, an only software implementation of the sequencing supervisory link and retry functions is not appropriate since it impairs the performance of the communication system. An only hardware implementation is not appropriate either, since it lacks flexibility and could be very costly due to the complexity of these functions.

### Summary of the Invention

Consequently, an object of the present invention is a mechanism implemented in each unit of a communication node, which allows the sequencing supervisory and retry functions to be split between hardware parts and software parts in a very efficient way.

An object of the present invention is such a mechanism which improves the performance of the communication node without increasing its cost.

The mechanism according to the present invention provides for an efficient interface between the hardware parts and software parts of communication modules used in a communication node wherein one module communicates with another module at a very high speed. In such an environment, the mechanism of the subject invention insures the integrity of the data messages transferred between modules without impairing the performance of the data transfers.

To deal with the problem of data message integrity at a very high speed, data link control DLC protocol relevant to steady state functions is implemented in hardware by finite state machines and software is in charge of the initialization and recovery procedures.

The mechanism according to the present invention performs the steady state functions of a transmission protocol managing the message transfers between origin and target modules and also performs the error recovery functions, in a communication node wherein a number n of modules are connected by a communication medium such as a high speed switch and wherein each module comprises a microprocessor running a control program, receiving and transmitting systems for receiving and transmitting messages from and to the communication medium respectively. The mechanism comprises:
in each module i, with i being any number comprised between 1 and n,
- a data store for storing:
   - first messages received by the receiving system from any origin module among the n modules, second messages to be transmitted by said module to any target module among the n modules and saving said second messages until they are acknowledged by the target module, and third messages which are processed by the microprocessor
   - n control blocks (SCB,) with one control block assigned to one module, for holding the transmission protocol variables relative to the transfer of messages between the module i and the module assigned to the control block
- a memory for storing:
   - n sets of indicators with one set assigned to one module, each set of indicators being representative of the transfer conditions between the module i and the assigned module,
   - message transfer control logic which is responsive to the transmission protocol variables in the control block and to the set of indicators relative to one module j, with j being any number comprised between 1 and n, for,
   - reading one first message received from module j from the data store, if any
   - checking if said message contains a valid acknowledgement of a saved message waiting for acknowledgement. If yes, erasing the saved message, and building an acknowledgement message (I) and transmitting said message to module j, by reading a second message intended to module j in the storing means, if any, and adding acknowledgement variables to said message and saving said acknowledgement message (I) or if there is no second message intended to the origin module j building an acknowledgement message (RR) containing only the acknowledgement variables. If no, signalling a protocol error to the microprocessor by writing a third message signalling the protocol error to the microprocessor if the received message does not contain a valid acknowledgement in order the microprocessor initiates the error recovery procedure.

The message transfer control logic in any module i, comprises a scheduling circuit and a message processing logic. The scheduling circuit sequentially addresses the data store and memory in successive time periods t1 to tn of a scheduling period T to read during each time period tj, the control block assigned to module j and the set of indicators and and generate therefrom first transfer control signals for controlling the reception of one message from module j by module i and the transmission of one message from module i to module j. The message processing logic is responsive to the first and second transfer control signals to process the reception of one message from module j by module i and the transmission of one message to module j by module i and then update the control block and the set of indicators assigned to module j.

The error recovery procedure is initiated by the microprocessor in module i, when it receives a third message signalling a protocol error posted in the data store by the message processing logic, relative to a transfer between module i and any module j, and in response thereto the microprocessor in module i and the microprocessor in module j initiate an exchange of signalling messages between module i and module j including the transmission protocol variables in order to determine which saved second messages are not acknowledged in the data store in module i and module j in order said messages are transmitted again and the transmission protocol variables are updated accordingly.

### Brief Description of the Figures

Figure 1 represents the block diagram of a communication node wherein the mechanism according to the present invention can be implemented.

Figure 2 represents the arrangement of the data store 10 to show the data flow during a normal communication between two communication modules.

Figure 3 represents the data store interface in more details.

Figure 4 represents the formats of the sets of indicators, of the control blocks, and of the message control blocks.

Figure 5 represents in more details the station service arrangement 50 which is the hardware part performing the sequencing and supervisory functions according to the subject inventions.

Figure 6-A and 6-B represents the state diagram of the receive logic RCV in the station service arrangement shown in Figure 5.

Figure 7 represents the state diagram of the release logic RLS of the station service arrangement.

Figures 8-A and 8-B represent the state diagram of the transmit logic XMIT of the station service arrangement.

Figure 9 represents the state diagram of the end of message processing logic EOM of the station service arrangement.

Figure 10 represents the state diagram of the time out processing logic TO of the station service arrangement.

Figure 11-A, 11-B and 11-C represent the block diagrams of the recovery functions implemented by the software.

### Detailed Description of the Invention

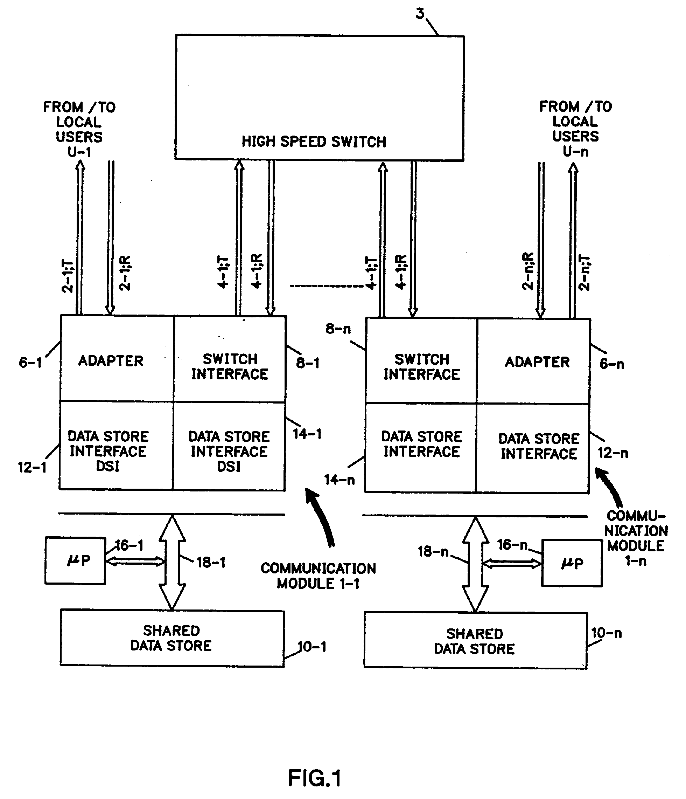

Figure 1 shows a specific communication node wherein the mechanism according to the present invention can be implemented. This communication node is only shown as an example of the environment in which the invention can be used. From the teaching of the detailed description of the invention when implemented in this environment, the man skilled in the art will be able to implement the invention in different environments.

The communication node comprises a plurality of n communication modules 1-1 to 1-n, each one being connected to local users U-1 to U-n respectively through communication links 2-1 to 2-n. Each communication link comprises a transmit link 2-1;T to 2-n;T and a receive link 2-1;R to 2-n;R.

The communication modules can be connected to different types of local users in order to make the communication node able to perform any type of message transfers. For example, modules can be connected to a host system through a communication controller of the IBM 3745 type, other modules can be connected to terminals through separate communication lines or through a serial link, other modules can be connected to local area networks, etc.

The transfers of messages between modules are performed by a communication media which in a preferred embodiment of the invention can be a switching system 3 to which the modules are attached through links 4-1 to 4-n comprising receive links 4-1;R to 4-n;R and transmit links 4-1;T to 4-n;T.

This system is not described, since it is not part of the present invention. Any type of system such as a Time Division Multiplex bus can be used to perform this function. In a preferred application of the present invention, the switching system is a high speed switch such as described in European Patent Application 0 387 464 which selects pairs of modules and connect the pairs of selected modules so that they can transfer messages bursts within time periods.

The components in each communication module are referenced by numbers followed by a suffix 1 to n corresponding to the suffix 1 to n assigned to the module.

In the general description of a module, each component will be referenced by its reference number without any suffix.

Each module comprises a link adapter 6 to which the user links 2 are attached, a switch interface 8 to which the switch links 4 are attached.

The transfers of the messages from user links 2;R to switch link 4;T and from the switch links 4;R to the user links 2;T are performed through a shared data store 10 under control of data store interfaces DSI 12 and 14.

A data store interface able to perform this function is described in European Patent Application 0365731.

Each communication module comprises a microprocessor 16 running a control program stored in a memory which can be part of data store or a separate memory. The microprocessor controls the initialization of the hardware part of the module at power on and processes the error situations as will be described later on.

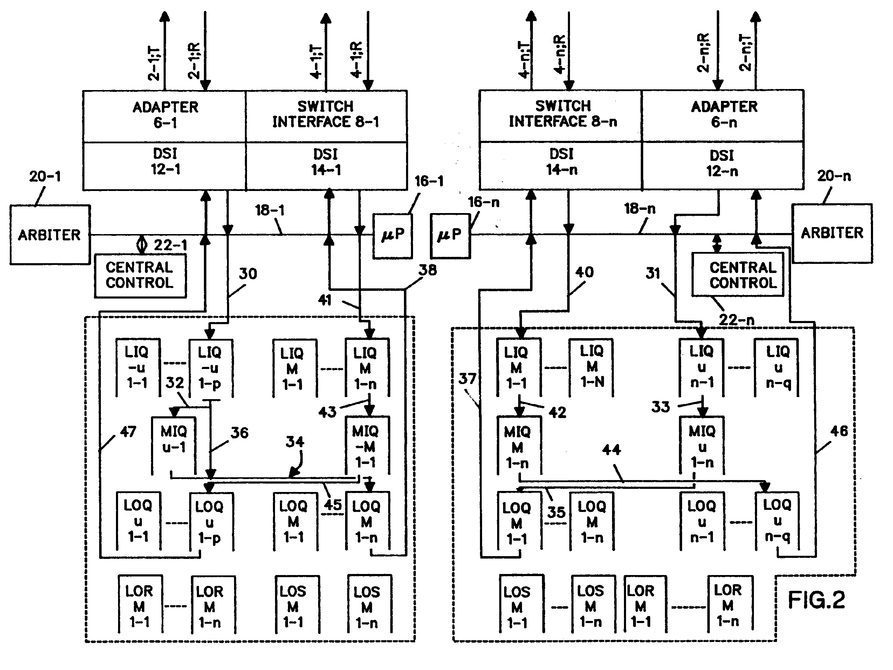

Figure 2 represents the flow of the data for data transfers between users attached to different communication modules, for example modules 1-1 and 1-n.

In the shared data store 10, there are as many link inbound queues LIQ as there are users attached to adapter 6 and communication modules 1-1 to 1-n. The link inbound queues assigned to users connected to adapters 6 are referenced LIQ-U with a suffix which indicates the module and the user number. Assuming that p users are attached to adapter 6-1 and q users are attached to adapter 6-n, the queue referenced LIQ-U1-p is assigned to the user numbered p connected to adapter 6-1 and the queue referenced LIQ-Un-q is assigned to user numbered q connected to adapter 6-n. The link inbound queue assigned to the communication modules 1-1 to 1-n are referenced LIQ-M with a suffix which indicates the module numbers 1-1 to 1-n.

The messages which are received from receive links 2;R and 4;R are first processed by the adapter 6 and switch interface 8 and are chained and enqueued in the assigned link inbound queues LIQ under control of the data store interfaces 12 and 14 as described in above referenced patent application. For example, the messages which are received by module 1-1 from module 1-n are enqueued in queue LIQ-M1-n.

There is also at least one microcode inbound queue MIQ per set of LIQ queues. These queues are referenced by MIQ followed by a suffix U or M to indicate that they correspond to the LIQ-U or LIQ-M and the module reference number. MIQ-U 1-1 is located in the shared data store 10-1 of module 1-1 and corresponds to the set of LIQ-U 1-1 to 1-p.

In the shared data store 10, there are as many link outbound queues LOQ as there are users attached to adapter 6 and communication modules 1-1 to 1-n. The link outbound queues assigned to users connected to adapters 6 are referenced LOQ-U with a suffix which indicates the module and the user number. Assuming that p users are attached to adapter 6-1 and q users are attached to adapter 6-n, the queue referenced LOQ-Un-q is assigned to the user numbered q connected to adapter 6-n. The link outbound queue assigned to the communication modules 1-1 to 1-n are referenced LOQ-M with a suffix which indicates the module numbers 1-1 to 1-n.

The messages which have to be transmitted to transmit links 2;T and 4;T are dequeued under control of the data store interfaces 12 and 14 from the LOQ queues and processed by the adapter 6 and switch interface 8 to be sent on the transmit links, as described in the above referenced patent application.

The data transfers between the shared data store 10 and the data store interfaces 12 and 14 are performed through bus 18. The bus accesses are controlled by an arbiter 20. The enqueueing and dequeueing operations are performed under control of a centralized control circuit 22 which is responsive to requests posted by the data store interfaces 12 and 14 and microprocessor 16 on the bus to manage the queueing and dequeueing operations in the data store 10.

The data flow for a message from user U1-p connected to adapter 6-1 to user Un-q connected to adapter 6-n is as follows.

A message received from U1-p is enqueued to LIQ-U1-p, which is schematically shown by path 30. Then, it is either enqueued into the microcode inbound queue MIQ-U1-1 under control of the microprocessor 16-1 as shown by path 32. The microprocessor determines that the message is to be routed to module 1-n and enqueues the message to the LOQ-M1-n as shown by path 34, or the message can be directly dequeued from the LIQ-U1-p and enqueued to the queue LOQ-M1-n in case of hardware routing, as shown by path 36.

Then, the message is dequeued from LOQ-M1-n by the data store interface 14 as shown by path 38 and provided by the switch interface 8-1 to link 4-1;T and by high speed switch 3 to destination module 1-n through link 4-n;R.

Since the message comes from module 1-1 it is enqueued to queue LIQ-M1-1 as shown by path 40. Then it is enqueued to the queue MIQ-M1-n for routing purpose, as shown by path 42.

The microprocessor determines that the destination user is Un-q and it causes the message to be enqueued to LOQ-Un-q, as shown by path 44.

Then, the data store interface 12-n causes the message to be dequeued from LOQ-Un-q to be sent to link 2-n;T, as shown by path 46.

Similar paths referenced by odd numbers from 31 to 47 exist for transferring a message in the other way from user Un-1 connected to module 1-n to user U1-p connected to module 1-1.

In a shared data store 10 the various queues are identified by pointers in queue control blocks QCB. These QCB blocks contain the address of the queue head and the queue tail, so that the enqueueing operation of a message from a first queue to a second queue only requires an updating of the queue head of the first queue and of the queue tail of the second queue in the queue control blocks of the first and second queues, respectively. A data store interface which allows these operations to be performed in an efficient way is described in the above referenced European Patent Application 0365731.

The data transfers through the high speed switch are performed at a speed which can reach 16 Megabytes per second in order to allow all the transfers between the end users to be carried out.

The messages are transferred using a subset of the well known High Level Data Link Control HDLC protocol.

According to these protocols, the transfers are performed within frames delimited by flags and comprising address A, control C, information I, Frame Check Sequence FCS fields.

It is assumed that one frame contains one message in the preferred embodiment of the present invention so that the frame and message represent the same entities.

There are three kinds of frames, namely the Information frames, the Supervisory frames and the Unnumbered frames.

The control field is used for frame sequence numbering, frame acknowledgement and other functions such as identification of the frames as an information frame, a supervisory frame or an unnumbered frame.

In the information frames, the control field comprises at least three bits (in the case of a one byte control field) which indicate the number NS of the transmitted frame, at least three bits which indicate the number NR of the next frame expected, this allows to acknowledge the frames up to the frame number NR-1.

The supervisory frames are used to perform link supervisory functions such as acknowledgment, retransmission request, signalling of temporary problems. These functions are indicated by two bits S, as follows:
. Bits S= 00 indicates a RR "Receive Ready " type of supervisory frame which is an acknowledgment frame used to indicate the next expected frame by means of NR. This frame is used when there is no reverse traffic through an information frame for acknowledgement.
. Bits S= 01 indicates a REJ "Reject" type of supervisory frame. It is used to indicate that a transmission error has been detected. The first frame in sequence not received correctly is indicated by NR. The sender is requested to retransmit all frames starting at NR.
. Bits S= 10 indicates a RNR "Receive not Ready" type of frame. It acknowledges all frames up to NR-1 as the RR frame but requests the sender to stop sending.
. Bits S= 11 indicates a SREJ "Selective Reject" type of supervisory frame. It calls for retransmission of only one frame numbered NR.

The unnumbered frame U does not contain the NR indication in the control field. This allows additional controls.

The mechanism of the present invention can be used for improving the performance of the transfers between two modules through the high speed switch, by processing the data link control functions such as the sequence numbering, the transmission window management, the acknowledgment functions, and the recovery functions in case of transmission errors in an efficient way. The function such as flag detection, zero insertion and deletion FCS generation and checking are performed by the adoptees. Hardware devices in the data store interfaces DSI 14-1 are in charge of the steady state functions and the microcode running in the microprocessors 16-1 to 16-n is in charge of the initialization and error recovery procedures. An efficient interface exists between the hardware and software functions in order to implement the present invention.

According to the subject invention, each communication module, comprises for each possible destination communication module:
- a hardware control block (SCB) in the shared memory to hold the HDLC state variables, this control block is used by the microcode for initialization and protocol error recovery and by the hardware to check whether the transfers of messages are in error or not, as will be described later on,
- additional queues in the shared memory 10 referenced LOS-M1-1 to LOS-M1-n and LOR-M1-1 to LOR-M1-n used as outstanding queues (LOS) for saving the frames until their acknowledgement and retry queues (LOR) for signalling functions and retry procedures.
- a set of indicators representative of the transfer conditions allowing to freeze the hardware in case of protocol errors and lock message transmission except from the LOR queues during retry procedures to give priority to the retry functions over the normal transmission functions.

Each data store interface 14-1 to 14-n comprises a set of finite state machines and a scheduler constituting the hardware devices in charge of the steady state functions.

In addition to the hardware control block SCB, a control block (MCCB) for each message is used for additional communications between the hardware and the microcode on a message basis.

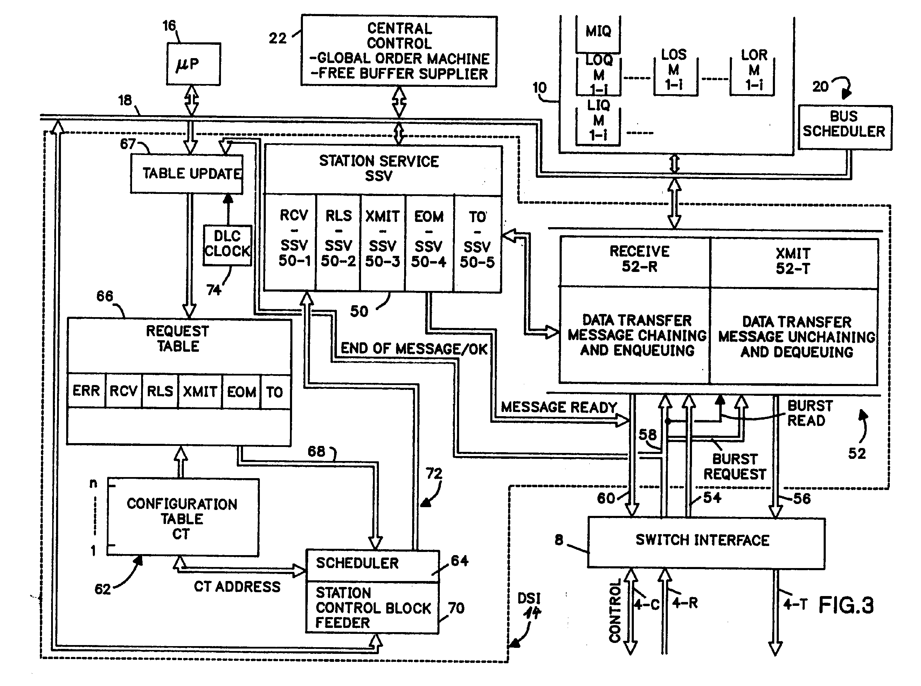

Figure 3 represents the block diagram of the data store interface 14 which manages the transfers of messages received from link 4-R from the high speed switch 3 through the switch interface 8 and of the messages to be transmitted from link 4-T through the switch interface 8. Such a mechanism is not required in the data store interfaces 12, since the messages are transferred between links 4 and 2 through the shared memory 10.

Data store interface DSI 14 comprises a station service arrangement SSV 50 which includes five finite state machines 50-1 to 50-5 referenced RCV, RLS, XMIT, EOM, TO.

Each part processes the reception of messages (RCV-SSV), the removal of messages from the LOS queues when they are acknowledged (RLS-SSV), the transmission of messages (XMIT-SSV), the operations needed at the end of the message transmission (EOM-SSV) and a time out control (TO SSV) for the detection of transmission errors, respectively. The station service arrangement 50 provides for minimum services to supervise the communication between two communication modules according to the subject invention.

Data movement circuit 52 comprises a receive part 52-R and a transmit part 52-T which receives data bursts from the high speed switch 3 through data bus 54 and provides data bursts to the high speed switch 3 through data bus 56, under control of signals on control bus 58 and 60.

The receive part 52-R performs the buffer and message chaining and the message enqueueing in the data store 10 and the transmit part 52-T performs the buffer and message unchaining and the message dequeueing from the data store 10.

Only the control signals which are needed for implementing the subject invention are referenced in Figure 3. These signals comprise "message ready" signals which are provided by the station service arrangement 50 to the switch interface 8 when a message is ready to be transmitted, "burst request" signals which are provided by the switch interface 8 to request the transmission of a data burst and "end of message" signals which are provided by the switch interface 8 to signal the end of the correct transmission of a message.

Also, a control bus 4-C is provided between the switch 8 to carry signals which are needed for controlling the data bursts transfers on data bus 4-R and 4-T.

A configuration table 62 comprises at least n entries with one entry per communication module. A scheduler 64 scans the configuration table 62 to obtain an entry in a request table 66.

The configuration table 62 is a random access memory RAM which is initialized by the microprocessor. It is treated as a wrap table by the scheduler 64. Each entry contains an identification of a communication module, i.e a module number. If all modules are to be served equally the number of entries is equal to the number of the communication modules, but if a module is to be served more frequently than another, it must be repeated within the configuration table 62.

Physically, the configuration table 62 can be in the same RAM memory as the request table 66. The request table 66 holds the set of indicators relative to each communication module. It contains a set of indicators representative of the receive RCV, release RLS, transmit XMIT, end of message EOM and time out TO conditions indicating the operations which have to be performed for each, communication module and of ERROR conditions ERR which will be detailed later on. The request table is updated by a table update circuit 67 as a function of the operations which are performed for each communication module as will be described later on, by the end of message signal from bus 58 and by a clock 74.

The conditions which are read from the request table 66 are provided to scheduler 64 through bus 68 which determines the operations which have to be performed, if any. It activates a station control block feeder 70 to get the station control block SCB for the scheduled communication module from the data store 10. The station control block is provided to the station service arrangement 50 and the scheduler 64 activates the appropriate parts 50-1 to 50-5 of the station service arrangement 50 through bus 72 in order the station service arrangement performs the operations specified by the conditions read from the request table. When the operations are completed, the station control block updated by the station service is put back in data store 10.

The enqueueing of a message to a specified queue, the dequeueing of a message from a specified queue, the releasing of the buffers containing one message to a free buffer queue, the leasing of buffers to add a message to a queue and the managing of the free buffer queue are performed by centralized control circuit 22, thanks to requests called global orders originating from the station service arrangement 50, the data movement arrangement 52 and the microprocessor 16, as described in above referenced European Patent Application 0365731. As fully described in this Patent Application, the messages are contained in a number of buffers chained together by a buffer control block BCB, which contains a message chaining control block MCCB and a buffer chaining control block BCCB.

The MCCB of the first buffer of a message contains the address of the first buffer of the next message. The BCCB of each buffer contains the address of the next buffer. A specific code, for example FFFF in the MCCB indicates that the message is the last message in the queue and FFFF in the BCCB indicates that the buffer is the last buffer of a message. The queue control block QCB which points to the head and tail of the queue contains the address of the first buffer of the first message LIQ-H and the address of the first buffer of the last message LIQ-T.

Also, the MCCB and BCCB contain parameter and status information. Only a part of the MCCB contents is used for implementing the present invention.

At each scanning period, the scheduler 64 in a module 1-i scans the request table RT 66-i and the RT contents of the request table which relates to a communication module 1-j is provided to the scheduler, with i and j being any number comprised between 1 and n.

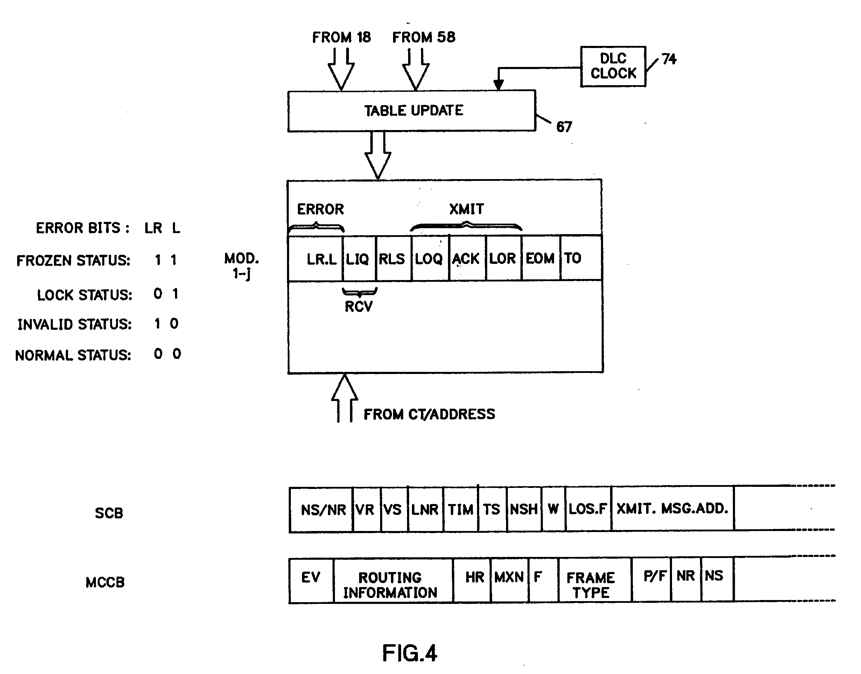

The indicators for one communication module contained in the request table RT 66 are shown in Figure 4.

The ERROR bits are used for controlling the error cases.

The ERROR bits LR and L define two error status called FROZEN and LOCK status according to the following encoding:
- FROZEN STATUS: : LR=1 L=1,
- LOCK STATUS: : LR=0 L=1,
- INVALID CONDITION: : LR=1 L=0,
- NORMAL CONDITION: : LR=0 L=0

When in FROZEN status, the received messages are flushed, there is no release from the LOS, no dequeue from LOQ, no dequeue from LOR, no EOM process, no time out process.

When in LOCK status, the reception is working normally, the release from LOS is working, there is no dequeue from LOQ, the EOM process is working normally, there is no time out process.

When in NORMAL condition, the processes set up by the other RT indicators are executed normally.

The invalid conditions are not relevant for the purpose of the present invention. They signal internal errors for any other purposes.

The LIQ bits indicates whether the LIQ queue is empty or contains at least one message which can be dequeued.

The RLS bit is set to 1, when a message may be released from the LOS queue. It is set by the RCV part of the station service arrangement 50 when receiving a message whose NR number indicates that one or several frames may be removed from the corresponding LOS queue. It is reset by the RLS part of the station service arrangement 50 when no more messages may be removed.

The LOQ bit and LOR bit indicate whether the LOQ-M1-j and LOR-M1-j are empty or not.

The function of the Acknowledge Required Bit ACK is to indicate that an acknowledgement frame must be sent to the communication module 1-j. It is set by the RCV part of the station service arrangement 50 when it receives a I message which must be acknowledged and reset by the XMIT part after the transmission of the acknowledgement message which can be a I message if the LOQ bit is set to 1 indicating that a I message is ready to be sent in the LOQ-M1-j or a RR supervisory message which is built by the XMIT part of the station service arrangement 50.

The EOM conditions are indicated by a EOM counter which is incremented by the end of Message signals signalling the end of a correct transmission of one message from the queue LOQ-M1-j.

EOM bits = 0 means that no message is waiting the EOM process.

EOM bits = 1 means that one message is waiting the EOM process.

In the data store 10 of a module 1-i, the format of the information contained in the station control block SCB for a module 1-j required to implement the present invention is shown in Figure 4.

It comprises a NS/NR bit which is set at initialization by the microprocessor for indicating whether the NS/NR checking of the DLC protocol for the corresponding module is to be made by the station service hardware according to the teaching of the present invention or not.

VR bits indicate the sequence number of the next I message expected by module 1-i from the module 1-j.

VS bits indicate the sequence number of the next I message to transmit from module 1-i to module 1-j.

LNR bits indicate the last NR received from module 1-j.

TIM is a timer value.

TS indicates that the timer is started.

NSH indicates the NS value of the first message in the LOS M1-j.

W is a transmission window value which indicates the number of messages waiting for acknowledgement in the queue LOS M1-j. This number must be lower than a maximum value Wmax.

LOS F indicates that the LOS M1-j contains at least one message.

MSG ADD comprises the address of the last message transmitted by module 1-i to module 1-j, i.e the address of the first buffer of the message.

The station control block can comprise other information for any other purposes.

The parameter/status bits of the MCCB which are of interest for the implementation of the present invention are shown in Figure 4.

These bits are the following:

bit EV is set to 1 to indicate that the message is an event message. It is set by the central control machine 22 when performing an ENQUEUE EVENT global order,

ROUTING INFORMATION bits which identify the origin and destination users involved in the message transfer. bit HR (hardware release). This bit indicates that the message must be released by the station service arrangement 50 after transmission.

bit MXN: Message Transmitted Notification which is set by the microcode to ask the station service arrangement 50 to enqueue an event in the MIQ queue after successful transmission of the message.

bit F: flush which indicates that the message must be released.-

FRAME TYPE field indicates the frame type: i.e I, S or U with P/F=0 or 1. Only the I and RR frames with P/F=0 are processed by the station service.

NS and NR bits comprises the NS and NR sequence values for the message.

The frame type and NR, NS bits represent the command field C of the frame.

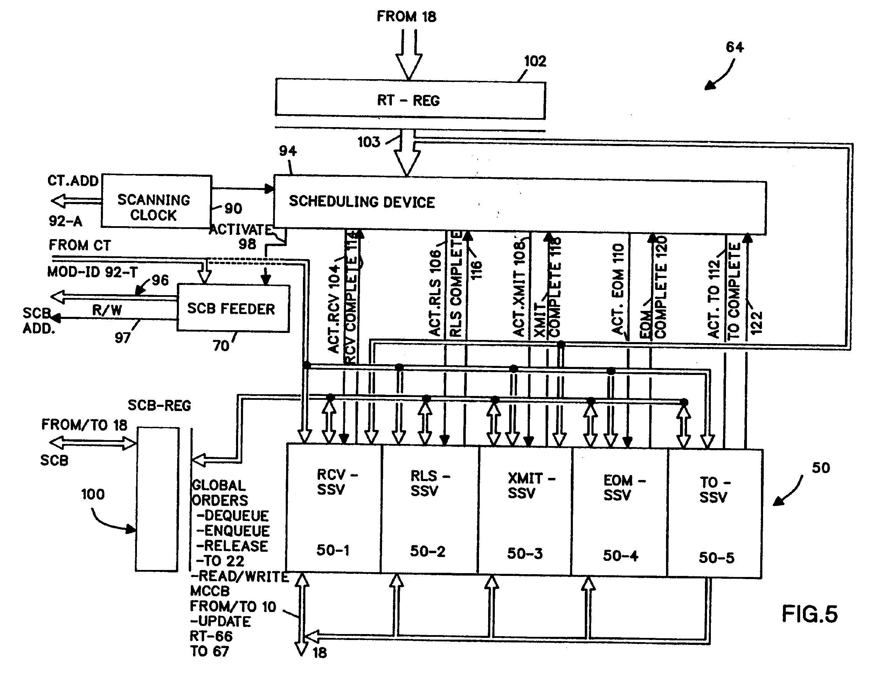

The block diagram of the scheduler 64, station control block feeder 70 and station service arrangement 50 is shown in Figure 5.

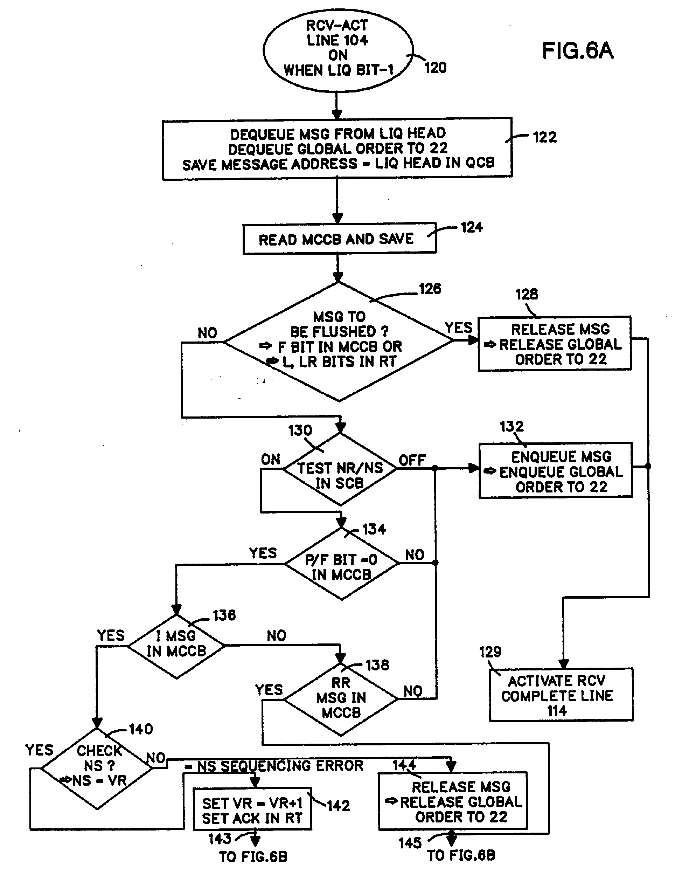

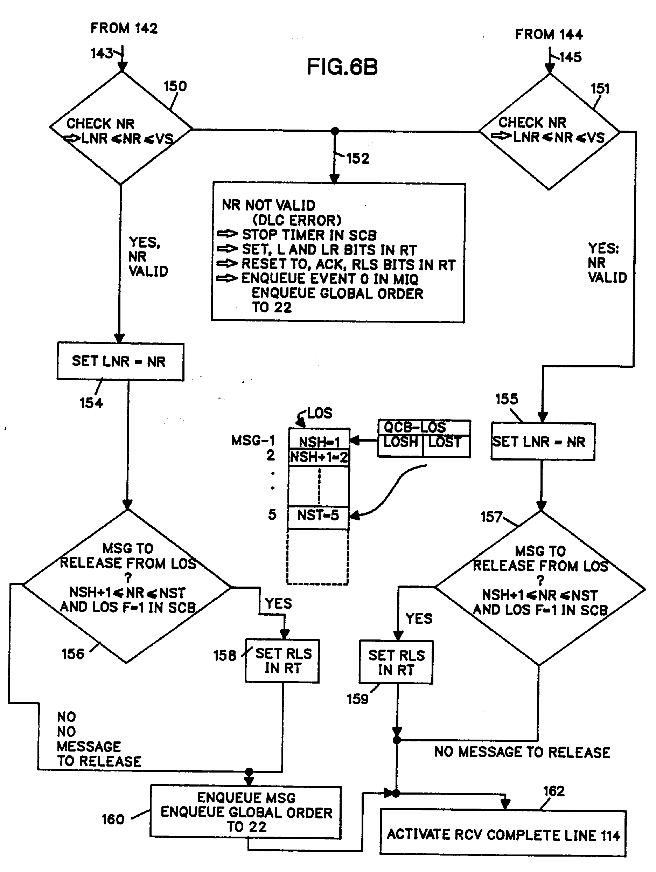

The station service arrangement 50 is comprised of five finite state machines RCV-SSV, RLS-SSV, XMIT-SSV, EOM-SSV and TO-SSV 50-1 to 50-5 which comprise logic circuits which can be easily implemented by the man skilled in the art from the state diagrams shown in Figures 6 to 10 respectively.

The scheduler 64 comprises a scanning clock 90 which provides an address to the configuration table CT 62 at each scanning period t1 to tn through the address bus 92-A. The configuration table 62 is read and the module identification read from the addressed location is provided to the SCB feeder 70 through bus 92-I.

The module identification is provided to the SCB feeder 70 through bus 92-I and SCB feeder generates the corresponding SCB address in data store 10.

The scheduling device under control of the scanning clock 90, activates the SCB feeder 70 through signals on bus 98, and SCB feeder 70 generates Read/Write control signal on line 97 together with the SCB address on line 96.

The SCB block read from data store 10 is written into SCB register 100. At the beginning of a scanning period, if the module identification is different from the module identification at the previous scanning period, the SCB register contents which has been updated during the previous scanning period is written back into the memory 10 and the new SCB block for the new module is loaded into the SCB register 100. If there is no module identification change, the updated SCB register contents remains in SCB register 100 and is used by the station service arrangement during the new scanning period.

Also, at each scanning period, the RT contents read from the request table 66 is saved in register 102 and provided through bus 103 to scheduling device 94 and to station service arrangement 50. Scheduling device is responsive to the bit configurations in the register 102 to sequentially activate the five parts of the station service 50 in the following order: RCV-SSV, RLS-SSV, XMIT-SSV, EOM-SSV and TO-SSV when required. To do this, the scheduling device 94 provides an ACTIVATE signal on line 104, 106, 108, 110 or 112 respectively.

When each part of the station service has completed its process, it returns a COMPLETE signal on line 114, 116, 118, 120 or 122 to the scheduling device 94 in order it activates the next part.

The SCB register contents is provided to the five parts of the station service 50, in order to control their operations as described in reference to Figures 6 to 10.

The operations which are performed by the Receive part of the station service 50-1 in any module, for example 1-i, when the processing of a module 1-j is scheduled by scheduler 64 is shown in Figure 6.

The ACT RCV line 104 is activated (operation 120) when the LIQ-M1-j in module 1-i is not empty, which is indicated by the LIQ bit in register 102.

This operation starts the receive process.

The head message in the LIQ-M1-j is dequeued (operation 122). The address of the message to be dequeued is found in the queue control block QCB in the LIQ head field, a DEQUEUE global order is sent to centralized control circuit 22, the dequeue operation is performed. The address of the message which is provided in the DEQUEUE global order response is saved.

The MCCB block of the message is read and its contents is saved (operation 124).

The F bit in the saved message control block MCCB and the L and LR bits in the RT register 102 are tested (operation 126). If the F bit is set to 1 or if the L and LR bits are set to 1 (FROZEN STATUS), the message is flushed (released) and the message buffers are released to the free buffer queue (operation 128) through a RELEASE global order sent to centralized control circuit 22. Then, the Receive Complete line 114 is activated (operation 129).

If not, the NR/NS bit in the SCB in register 100 is tested (operation 130). If it is off, which means that the DLC protocol has not to be performed by the station service, the message is enqueued to the MIQ queue or to a LOQ, according to the MCCB routing information circuit by sending an ENQUEUE global order to the centralized control 22. Then, the Receive Complete line 114 is activated (operation 129).

If the bit NS/NR in SCB is found ON, the P/F bit is tested (operation 134). This bit which is a bit of the control field in the frame is set to 0, in the I frames or RR frames to indicate that the DLC protocol is to be performed by the station service arrangement 50.

If the P/F bit is on, the message is enqueued by sending an ENQUEUED global order to centralized control circuit 22 and line 114 is activated (operations 132 and 129).

If not, the frame type in MCCB is checked. It is first checked whether the message is a I message, (operation 136). If no, it is checked whether it is a RR message (operation 138). If the message is neither a I message nor a RR message it is enqueued to the MIQ queue or to a LOQ, according to the MCCB routing information (operation 132).

Only the I frame comprises a NS sequence number. This number is checked (operation 140) by comparing NS which is the number of the received message with VR which is the number of the expected message. If NS=VR, the sequence number of the received message is valid and the frame must be acknowledged. To do this, the ACK bit in the request table is set to 1, in order an acknowledgement message be sent at the next scanning period of the module, and VR is incremented to VR+1 in the SCB, (operation 142).

If NS is different from VR, a sequencing error has occurred and the message is released by sending a Release global order to centralized control circuit 22, (operation 144).

The NR value of the I or RR received message is tested as shown in Figure 6B.

The NR checking is performed by the same operations for the I message with no NS sequencing error (leg 143 in Figure 6-A) and for the I message with a NS sequencing error or a RR message (leg 145 in Figure 6-A). These operations are referenced by even numbers and odd numbers respectively in Figure 6-B.

The first operations (150 and 151) consist in checking the NR value. To be good, this value must be lower or equal to VS and higher or equal to LNR. NR not valid is indicative of a DLC error.

In that case, the timer in SCB register 100 is stopped (TS=0). FROZEN status is set L=LR=1 in request table 66. TO, ACK, RLS bits in request table 66 are reset and an EVENT 0 is enqueued in the MIQ queue by sending an ENQUEUE EVENT global order to centralized control circuit 22, to signal the DLC error to the microcode in order it initiates the recovery process.

If NR is valid, LNR is updated i.e set to NR (operations 154 and 155).

Then, it is determined if this message acknowledges messages in the LOS queue LOS-M1-j (operations 156 and 157), in order to release the so-acknowledged messages. This operation consists in testing the LOS F bit in SCB register 100 and testing whether NR is lower than or equal to the NS value of the tail message NST in the LOS queue and higher or equal to NSH+1, assuming the messages are enqueued and chained in the LOS queue from the queue head, as described in the above referenced European patent application, and as schematically represented in Figure 6-B. As shown in Fig. 6-B, the NS value of the head message MSG 1 is equal to 1, the NS value of the last message is NST=5. If NR is equal to 1, meaning that the next expected message is message 1, message 1 cannot be released since it is not acknowledged. If NR is equal to 2, message 1 can be released, etc.. If NR=4 messages 1, 2, 3 can be released.

The NST value is calculated from NSH and W, and is equal to NSH+W-1 where W in SCB register 100 is the number of messages in the LOS queue.

If the condition is met, messages in the LOS are acknowledged and can be released, the RLS bit in RT 66 is set, in order to schedule the RLS-SSV during the next scanning period (operations 158, 159).

If the condition is not met, no message is acknowledged.

The next operation 160 after operations 156 and 158 consists in enqueueing the message by sending an ENQUEUE global order to central control 22, in order to complete the receiving process of a valid I frame and then to activate the RCV complete line 114 (operation 162).

Operation 159 ends the receiving process of a RR message with a NR valid, so that operation 162 is performed after operations 157 and 159.

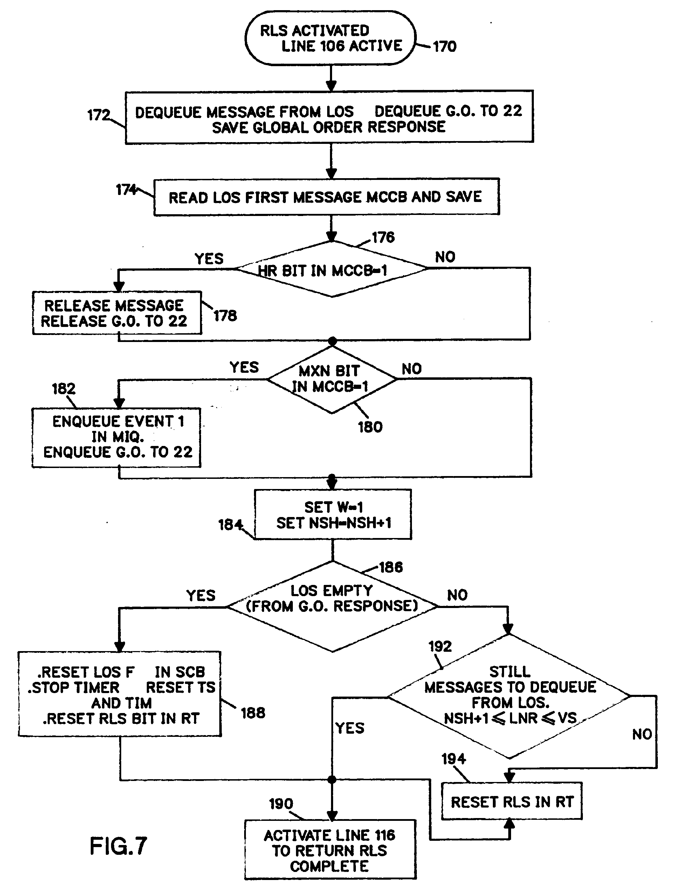

The operations performed by the RLS-SSV 50-2 will now be described in reference to Figure 7.

The RLS-SSV is activated when line 106 is active, i.e when the RLS bit in register 102 is set (=1) and the receive operations in the RCV-SSV are completed (line 114 active) or if no receive process has to be made (LIQ bit = 0), these conditions are detected in operation 170.

Then, the head message is dequeued from the LOS-M1-j, this is done by sending a DEQUEUE global order to centralized control circuit 22 and the global order response which contains the message address and indicates if the message is the last one in the LOS is saved (operation 172).

The message control block MCCB is read and saved, (operation 174).

The HR bit in MCCB is tested (operation 176), if it is set to 1 which means that a hardware release of the message is requested, the message is released to the free buffer queue by sending a RELEASE global order to the central control 22 (operation 178).

If the HR bit is reset to 0 or after the message release, the MXN bit is tested (operation 180). This bit is set to 1 by the microcode when the microcode asks for a notification that a message is transmitted, this function is needed for the implementation of the retry process which will be described later on.

If the MXN bit is found set to 1, an event 1 is enqueued in the MIQ queue by sending an ENQUEUE global order to centralized control circuit 22, (operation 182).

If the MXN bit is reset to 0 or after the event enqueue, the W value is decremented i.e W is set to W-1 and NSH is incremented, i.e set to NSH+1 (operation 184).

Then, (operation 186) the global order response saved at the end of operation 172 is tested to determine whether the LOS queue is empty (this is the case if the last message was dequeued from the LOS).

If yes, the bit LOS F in SCB register 100 is reset (=0), the timer is stopped TS and TIM are reset to 0 in SCB register 100 since there is no more messages in LOS waiting for acknowledgement and bit RLS is reset (=0) in request table 66 (operation 188) and then RLS Complete line 116 is activated (operation 190).

If no, it is tested (operation 192) whether the LOS queue still contains messages which may be released. This is done by comparing LNR in SCB with VS and NSH+1, if the condition NSH+1 ≦ LNR ≦ VS is met, meaning that the LOS contains messages able to be released line 116 is activated (operation 190). If no, bit RLS in request table 66 is reset (=0) (operation 194) and then line 116 is activated (operation 190).

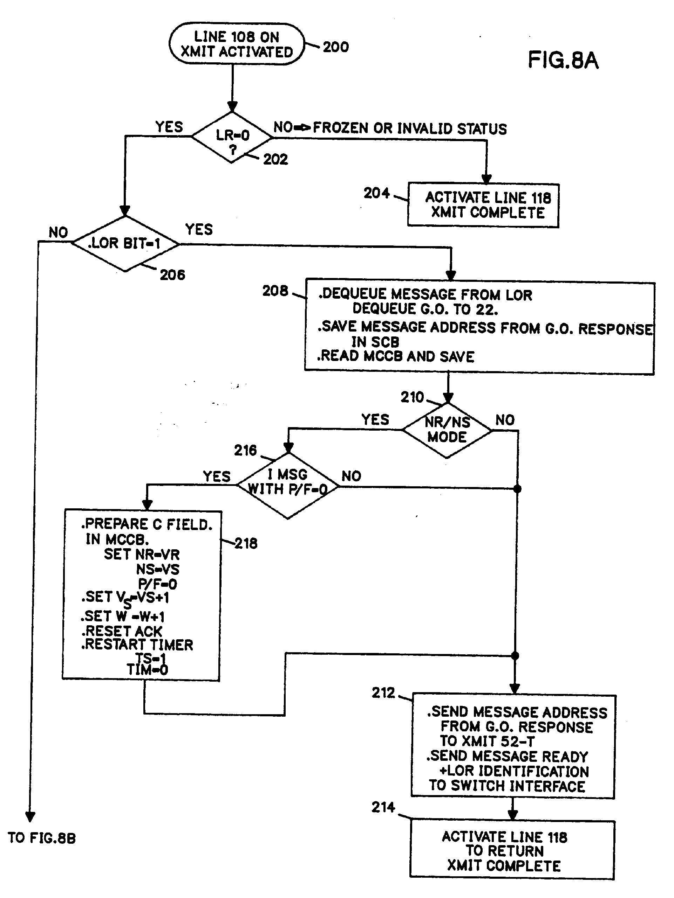

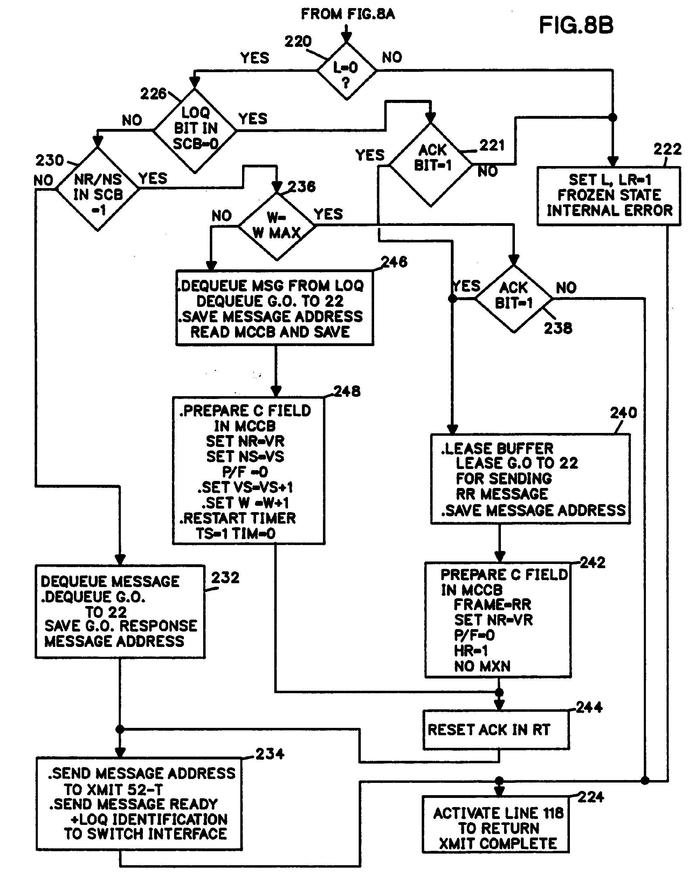

The operations performed by the XMIT-SSV 50-3 are described in reference to Figures 8-A and 8-B.

The XMIT-SSV 50-3 is activated by the scheduling device 94 upon reception of an active signal on line 116 meaning that the receive and release process in the finite state machine 50-1 and 50-2 are completed or if LIQ bit and RLS bit are set to 0 in register 102, meaning that no receive and release processes have to be made for the communication module.

To activate the XMIT-SSV 50-3, the scheduling device 94 activates line 108 (operation 200). Then, bit LR in register 102 is tested (operation 202). Bit LR=1 indicates an INVALID or FROZEN status, and the XMIT process is completed by activating line 118 for returning XMIT Complete signal to scheduling device (operation 204).

Bit LR=0, means that the dequeueing from the LOR-M1-j is not locked.

LOR bit in register 102 is tested (operation 206). If it is equal to 1 meaning that the LOR queue contains messages, the head message from the LOR queue is dequeued by sending a DEQUEUE global order to centralized control circuit 22, the message address from the global order response is saved in the XMIT Message address field of the station control block SCB in register 102, the MCCB is read and saved (operation 208).

The NR/NS bit in SCB register 100 is tested (operation 210), to determine whether the DLC protocol functions are to be performed by the station service arrangement or not. If not, (bit NR/NS=0) the message address saved during operation 208 is sent to the XMIT circuit 52-T and the LOR identification and a Message ready signal are sent to switch interface 8-i through bus 60 (operation 212) and line 118 is activated (operation 214) to return XMIT complete to scheduling device 94.

If the bit NR/NS is found equal at 1 during operation 210, the MCCB contents is analyzed (operation 216) to determine whether the message dequeued from the LOR is a I message with a P/F bit equal to 0, meaning that the message can be used for sending an acknowledgement. The C field of the message is prepared in the MCCB. NS is set equal to VS, NR is set equal to VR,P/F is set equal to 0. In SCB VS is set equal to VS+1, W is set equal to W+1, the ACK bit in the request table 66 is reset, the timer is restarted, TS=1 and TIM=000.

At the end of this operation 218 or if it is detected during operation 216 that the dequeued message is not a I message with P/F=0, operations 212 and 214 described previously are performed, for sending the message.

If the queue LOR-M1-j is empty, the operations shown in Figure 8-B are performed. Thus, the transmission of the messages in the LOR queues has priority over the transmission of the messages in the normal LOQ queues.

First, the L bit is tested (operation 220) to determine whether the dequeueing from the queue LOQ-M1-j is locked or not.

If L=1, meaning that the dequeueing from the LOQ is locked, the Frozen Status is entered, due to an internal error, (operation 222) and line 118 is activated (operation 224) to return XMIT Complete to scheduling device 94.

If L=0, the LOQ bit in register 102 is tested (operation 226).

If it is equal to 0 meaning that the LOQ-M1-j is empty, the ACK bit in register 102 is tested (operation 228). If it is found equal to 0, the FROZEN status is entered (operation 222) and line 118 is activated (operation 224).

Then NR/NS bit in register 100 is tested (operation 230). If it is equal to 0, the head message in the LOQ queue is dequeued (operation 232) this is done by sending a DEQUEUE global order to centralized control circuit 22. The message address received in the global order response is saved.

The message address is sent to the XMIT circuit 52-T, and the LOQ identification and "message ready" signal are sent to switch interface 8-i through bus 60 (operation 234).

Then line 118 is activated (operation 224) to return XMIT Complete to the scheduling device 94.

If NR/NS bit is set to 1, the W value in SCB register 100 is compared to the Wmax value (operation 236) to determine whether the number of messages waiting for acknowledgement is lower that the maximum authorized value Wmax.

If yes, no more I messages are transmitted from the LOQ queue.

The ACK bit in register 100 is tested (operation 238). If it is equal to 0 meaning that no acknowledgement message must be transmitted, line 118 is activated (operation 224).

If it is equal to 1, a RR message must be transmitted. The XMIT-SSV 50-3 sends a LEASE global order to get buffers from the free buffer queue in order to be able to build the RR acknowledgement message The message address obtained from the LEASE global order response is saved in XMIT Message Address field in SCB register 100 (operation 240).

The C field of the RR message is prepared in the message control block MCCB (operation 242). Frame type is set to RR, NR is set to VR, P/F bit is set to 0, HR is set to 1 in order the message be released by EOM SSV of same module, the MXN bit is set to 0.

The ACK bit in RT 66 is reset to 0 (operation 244) and the operations 234 and 224 are performed to send the RR message.

If W is lower than Wmax, a I message is dequeued from the queue LOQ-M1-j (operation 246). A DEQUEUE global order is sent to the centralized control circuit 22. The message address from the global order response is saved in XMIT Message Address field in SCB register 102. The message control block MCCB is read and saved.

Then the C field of the message is prepared in the MCCB (operation 248). NR is set to VR, NS is set to VS, P/F bit is set to 0, VS is set to VS+1, W is set to W+1, the timer is restarted, TS=1 and TIM=000, then the ACK bit is reset (operation 244) and the message is sent (operation 234) and line 118 is activated (operation 224).

The EOM bit in request table 66 is set by the switch interface 8, when a message for a module for example 1-j is sent by the interface.

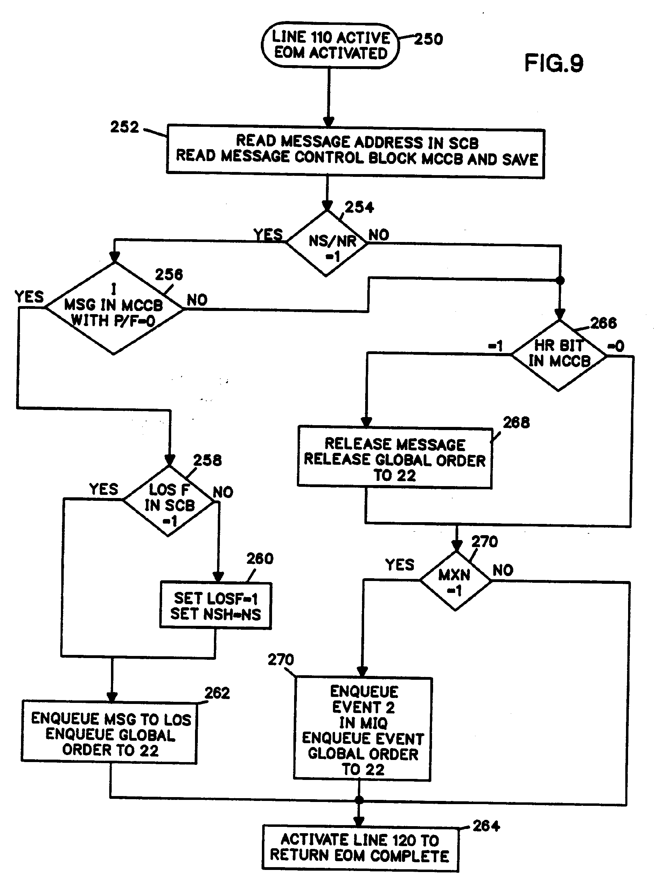

The operations performed by the EOM-SSV part 50-4 are described in reference to Figure 9. The EOM-SSV part is activated when the previous processes are completed, i.e. when the scheduling device 94 receives an active signal on the XMIT Complete line 118, if the EOM bit in RT register 102 is found at 1, (operation 250).

Then the message address is read from the Message Address field in SCB register 100, the corresponding message control block is read and saved (operation 252).

The NR/NS bit in register 100 is tested (operation 254). If it is found equal to 1, the message type and P/F bit in MCCB are tested (operation 256).

If the message is a I message with P/F bit=0, the LOS F bit in the SCB register 100 is tested (operation 258). If it is equal to 0, it is set to 1 and NSH in register 100 is set to NS read from MCCB (operation 260).

Then or if LOS F bit was found equal to 1 during operation 258, the message is enqueued in the outstanding queue LOS-M1-j (operation 262). The message address for the ENQUEUE global order sent to centralized control circuit 22 is the message address found in SCB register 100

The EOM process is completed by activating line 120 to return EOM Complete to scheduling device 94 (operation 264).

If NS/NR bit is equal to 0 or if the message is not a I message with P/F=0, the HR bit in MCCB is tested (operation 266).

If the HR bit is found equal to 1, the message is released, by sending a RELEASE global order to centralized control circuit 22 (operation 268).

Then or if the HR bit is equal to 0, bit MXN is tested (operation 270). If it is equal to 1, an EVENT 2 is enqueued to the MIQ by sending an ENQUEUE EVENT global order to centralized control circuit 22 (operation 272) to notify the microcode of the message transmission, as requested by the MXN bit.

Then, or if the MXN bit is equal to 0, line 120 is activated.

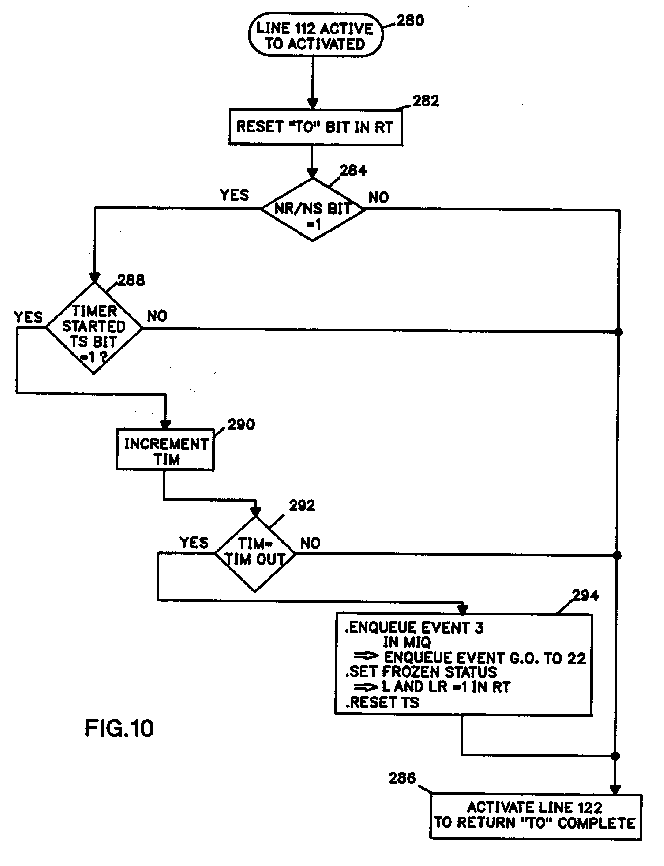

The operations performed by the time out TO-SSV part 50-5 are shown in Figure 10.

The TO-SSV part 50-5 is activated (operation 280) when the line EOM Complete 120 is activated if the TO bit in register 102 is active. The TO bit in request table is set at regular intervals in all positions of the request table 66 by the DLC clock 74.

The TO bit in RT 66 is reset (operation 282).

Then the NR/NS bit in SCB register 100 is tested (operation 284) . If it is equal to 0, line 122 is activated (operation 286) to return TO Complete to scheduling device 94.

If not, TS bit in SCB is tested (operation 288). If it is reset to 0, meaning that the timer is stopped, line 122 is activated (operation 286).

If it is set to 1, meaning that the timer is started, the TIM value is incremented by 1 (operation 280). Then the TIM value is compared to a TIME OUT value which is a fixed value hardwired in the station service T0-SSV part 50-S (operation 282). If the TIME OUT value is not reached, line 122 is activated (operation 2876).

If the TIME OUT value is reached, an event 3 is enqueued in the MIQ queue by sending an ENQUEUE event global order to the centralized control circuit 22, the L and LR bits in request table 66 are set to 1 to set the station service 50 in the FROZEN state and the timer TS is reset TS=0 (operation 284).

Then, line 122 is activated.

The function of the timer is to verify that a communication between two stations services is not interrupted. The operations described above are performed to verify that each I frame with P/F=0 is acknowledged within a predetermined time period TIM OUT. The DLC clock 94 sets the TO bit in the request table 66 to indicate that the timer value TIM in the SCB register 100 is to be incremented, if it has been started. The timer value TIM in SCB register 100 is reset to 0 and the timer is started TS=1 each time an I frame with P/F=0 is dequeued by the XMIT-SSV. It is incremented every millisecond by the TO-SSV. If it reaches the maximum value TIM OUT, the event 3 is enqueued in the MIQ queue.

It is reset TS=0 and TIM=0 when the last frame is dequeued from the LOS queue since there is no more I frames waiting for acknowledgement

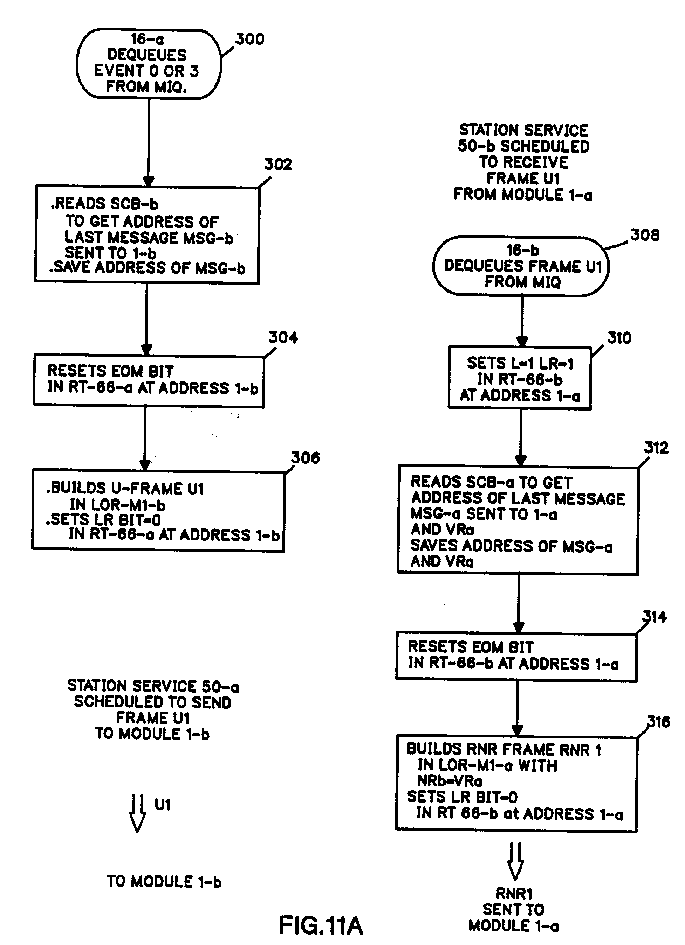

Figures 11-A to 11-B represent the operations which are performed by the microprocessors 16 under control of their microcodes in the modules whose station service arrangements SSV 50 detect protocol errors, i.e. DLC errors (operation 152-Figure 6-B) or time out errors (operation 282-Figure 10). As described in reference to Figure 6-B and Figure 10, when the station service detects such errors, it is set in the FROZEN status and a message called Event 0 or Event 3, respectively is enqueued in the microprocessor inbound queue MIQ.

The Event messages are specific messages which are built by the central control 22, when it receives an ENQUEUE event global order. This is done by leasing free buffers from the free buffer queue, storing the Event message in the leased buffers and appending a message control block thereto. The message is then enqueued to the MIQ.

The MCCB of the Event message has the same format as the MCCB of the other messages, it can be recognized by its EV bit which is set to 1. The event message comprises a field which identifies the event type, and a field which identifies the module which has posted the event in the MIQ queue and the destination module involved in the data transfer detected in error by the station service.

To describe the error recovery procedure, it will be assumed that a data transfer error is detected in a transfer through the switch 3 between module 1-a and module 1-b.

The stations service SSV 50 and microprocessor 16 in module 1-a will be referenced SSV 50-a and 16-a respectively. They will be referenced SSV 50-b and 16-b in module 1-b. In module 1-a, a station control block SCB-b is assigned to module 1-b, it contains parameters which are referenced by a suffix b, for example VRb indicates the sequence number of the next frame expected by module 1-a from module 1-b and VSb indicates the sequence number of the frame to be sent by module 1-a to module 1-b.

In module 1-b, a station control block SCB-a is assigned to module 1-a, it contains parameters which are referenced by a suffix a, for example VRa indicates the sequence number of the next frame expected by module 1-b from module 1-a and VSa indicates the sequence number of the frame to be sent by module 1-b to module 1-a.

A DLC error or a time-out error in module 1-a causes Event 3 to be enqueued in the MIQ queue as explained before and the station service arrangement in module 1-a to be set in the FROZEN status.

As shown in Figure 11-A, the messages in the MIQ are dequeued by microprocessor 16-a. The error recovery procedure by the microprocessor microcode is started when the microcode dequeues and identifies an EVENT 3 message (step 300). The next step 302 of the procedure consists in reading the SCB-b block to get the address of the last message MSG-b sent by 1-a to 1-b. This address is saved.

Then at step 304, the microcode resets the EOM bit in request table 66-a at the address of module 1-b.

At step 306, the microcode builds a U-frame in queue LOR-M1-b. This frame U1 is an unnumbered frame whose information contents indicates that an error (DLC or time-out) has been detected by module 1-b.

Bit LR is set to 0 in order the station service arrangement is scheduled to send this frame U1, (operations 200 to 212 in Figure 8-B).

Module 1-b receives the frame U1 in the LIQ-M1-a, the operations 120 to 138 described in reference to Figure 6-A are performed by the receive part of the station service arrangement 50-b, and the U-frame is enqueued to the MIQ queue. The microprocessor dequeues the frame U1 at step 308, the microcode identifies this frame U1 as a U frame and is thus aware that an error has been detected by module 1-a.

At step 310 it sets the station service arrangement 50-b in the FROZEN status by setting L and LR bits in request table 66-b at address 1-a to 1.

Then, at step 312 the microcode reads the SCB-a block to get the address of the last message MSG-a sent by 1-b to 1-a and VRa. This address and VRa are saved. At step 314, the bit EOM in request table 66-B at the address of module 1-A is reset.

At step 312, microcode builds a RNR frame RNR1 in queue LOR-M1-a to be sent to 1-a, this frame contains a NR sequence value NRb=VRa and microcode sets LR bit equal to 0 in order the station service arrangement 50-b can be scheduled to send this frame to module 1-a.

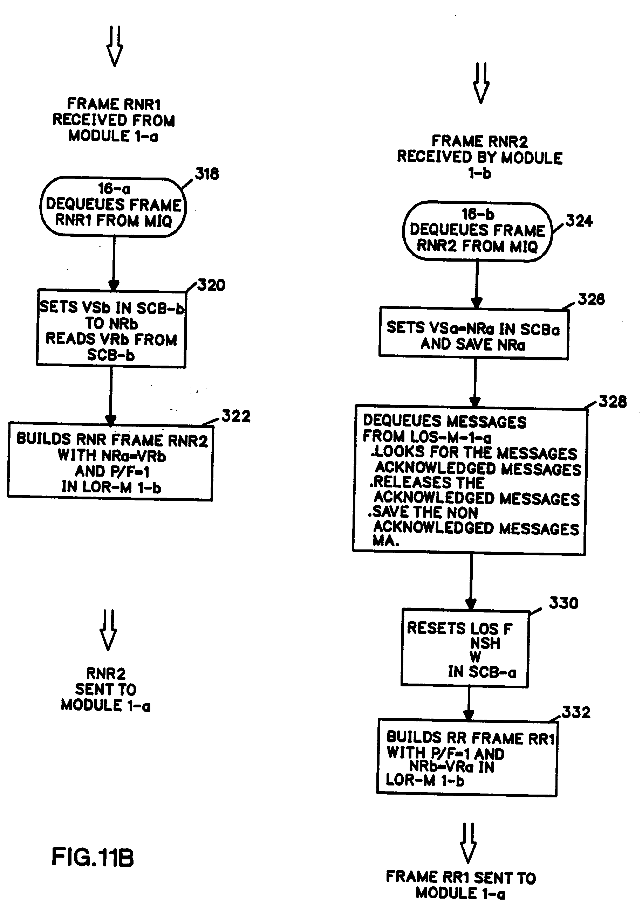

As shown in Figure 11-B, module 1-a receives the frame RNR1 in the LIQ-M1-b, the operations 120 to 138 described in reference to Figure 6-A are performed by the receive part of the station service arrangement 50-a, and the frame RNR1 is enqueued to the MIQ queue. The microprocessor dequeues the frame at step 318 (Figure 11-B) the microcode identifies this frame as a RNR frame and saves the NRb value. Then at step 320 it sets VSb equal to NRb in SCB-b and reads and saves VRb from SCB-b.

At step 322, microcode builds a RNR frame RNR2 with a NR sequence value NRa equal to VRb and P/F bit equal to 1 in queue LOR-M1-b.

Since the LR bit in request table 66-a is set to 0, this frame can be sent by module 1-a to module 1-b, as described above in reference to Figure 8-A.

Module 1-b receives the frame RNR2 in the LIQ-M1-a, the operations 120 to 138 described in reference to Figure 6-A are performed by the receive part of the station service arrangement 50-b, and the frame RNR2 is enqueued to the MIQ queue. The microprocessor dequeues the frame at step 324, the microcode identifies this frame as a RNR frame and sets VSa in SCB-a equal to NRa at step 326.

At step 328, the microcode dequeues the messages from the LOS-M1-a. It looks for the messages which are acknowledged by NRa, and release these messages and save the non acknowledged messages MA.

Then, at step 330 it resets LOS F bit, NSH and W in SCB-a.

The microcode of microprocessor 16-b builds a RR frame RR1, at step 332 with P/F bit equal to 1 and NRb=VRa.

The frame RR1 is sent to module 1-a.

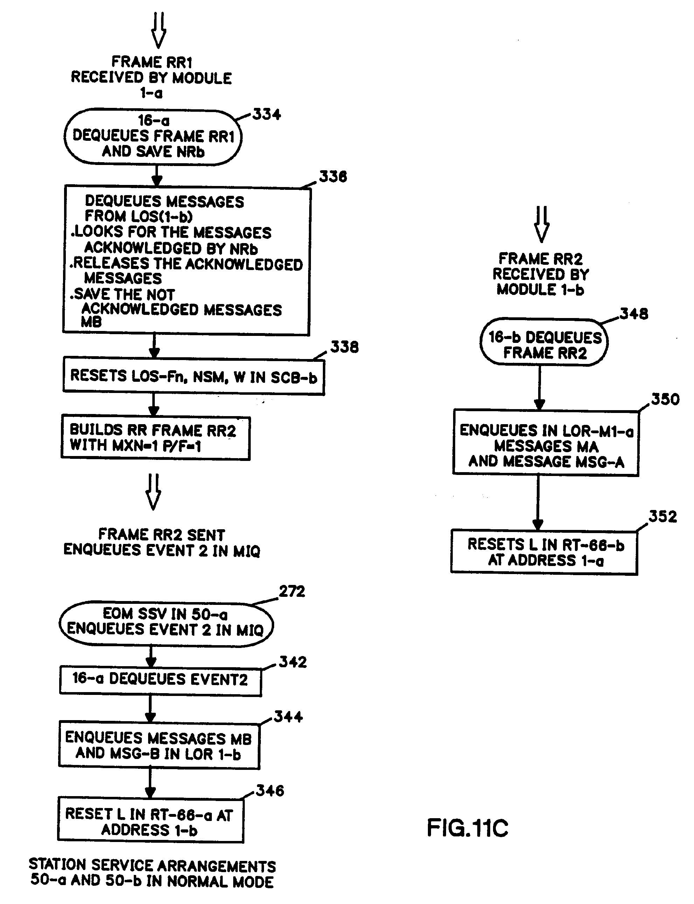

As shown in Figure 11-C, module 1-a receives the frame RR1 in the LIQ-M1-b, the operations 120 to 138 described in reference to Figure 6-A are performed by the receive part of the station service arrangement 50-a, and the frame RR1 is enqueued to the MIQ queue. The microprocessor dequeues the frame at step 334, the microcode identifies this frame as a RR frame and save NRb.

Then, at step 336 it dequeues the messages from queue LOS-M1-b and looks for the messages which are acknowledged by NRb. It releases the acknowledged messages and saves the non acknowledged messages MB.

At step 338, it resets the LOS F bit, the NSH and W values in SCB-b.

At step 340, it builds a RR frame RR2, with MXN=1 and P/F bit 1

The frame RR2 is sent to module 1-b by station service arrangement 50-a.

The EOM part of station service arrangement 50-a when it receives the end of message signal performs the operations described in Figure 9 and since P/F bit and MXN bit are equal to 1, the EVENT 2 message is enqueued in MIQ (operation 272).

When microprocessor dequeues the EVENT 2 message from the MIQ, at step 342 it is aware that the recovery process is completed for module 1-a.

Then, at step 344 it enqueues the messages MB saved at step 336 and message MSG-b whose address was saved at step 302 in queue LOR-M1-b. At step 346, bit L in request table 66-A at address of module 1-b is reset, in order the normal operations of the station service arrangement 50-a are resumed.

Module 1-b receives the frame RR2 in the LIQ-M1-a, the operations 120 to 138 described in reference to Figure 6-A are performed by the receive part of the station service arrangement 50-b, and the frame RR2 is enqueued to the MIQ queue. The microprocessor dequeues the frame RR2 at step 348, the microcode identifies this frame as a RR frame with MXN=1.

At step 350, it enqueues the messages MA saved at step 328 and message MSG-a whose address was saved at step 312 in queue LOR-M1-a. At step 352, bit L in request table 66-b at address of module 1-a is reset in order the normal operation of the station service arrangement 50-b are resumed.

Thus, once the station service arrangements 50-a and 50-b are resynchronized thanks to the supervisory messages exchanges described in reference to the Figure 11-A to 11-C, the non acknowledged messages MA, MB, MSG-a and MSG-b are resent, since these messages are in the retry queues LOR, they are resent before the transmission of messages from the normal queues LOQ.

## Claims

1. A mechanism for performing the steady state functions of a transmission protocol managing the message transfers between origin and target modules and performing the error recovery functions, in a communication node wherein a number n of modules are connected by a communication means (3) and wherein each module comprises a microprocessor (16) running a control program, receiving and transmitting means (8,14) for receiving and transmitting messages from and to the communication means respectively, said mechanism being characterized in that it comprises:
in each module i, with i being any number comprised between 1 and n,
- storing means (10,66) for storing:
. first messages received by the receiving means from any origin module among the n modules, second messages to be transmitted by said module to any target module among the n modules and saving said second messages until they are acknowledged by the target module, and third messages which are processed by the microprocessor;
. n control blocks (SCB) with one control block assigned to one module, for holding the transmission protocol variables relative to the transfer of messages between the module i and the module assigned to the control block;
. n sets of indicators with one set assigned to one module, each set of indicators being representative of the transfer conditions between the module i and the assigned module;
- message transfer control means (50, 64) which are responsive to the transmission protocol variables in the control block and to the set of indicators relative to one module j, with j being any number comprised between 1 and n, for,
. reading one first message received from module j from the storing means, if any
. checking if said message contains a valid acknowledgement of a saved second message waiting for acknowledgement, and
if yes, erasing the saved second message, and building an acknowledgement message (I) and transmitting said message to module j, by reading a second message intended to module j in the storing means, if any and adding acknowledgement variables to said message and saving said acknowledgement message (I) or if there is no second message intended to the origin module j building an acknowledgement message (RR) containing only the acknowledgement variables,
if no, signalling a protocol error to the microprocessor by writing a third message intended to the microprocessor, said third message signalling a protocol error, in order the microprocessor initiates the error recovery procedure.

2. Mechanism according to claim 1 characterized in that the message transfer control means in any module i, comprises:
scheduling means (64,62,70) which sequentially address the storing means in successive time periods t1 to tn of a scheduling period T to read during each time period tj, the set of indicators and the control block assigned to module j and generate therefrom first transfer control signals (104, 106) for controlling the reception of one message from module j by module i and the transmission of one message from module i to module j,
message processing means (50) which are responsive to first (104, 106) and second (108, 110, 112) transfer control signals to process the reception of one message from module j by module i and the transmission of one message to module j by module i and then update the control block and the set of indicators assigned to module j.

3. Mechanism according to claim 2 characterized in that the set of indicators for each module comprise:
- first indicators (L,R) which are set to different values representative of normal transfer conditions or erroneous transfer conditions,
- second indicators (LIQ) which are active to control the reading operation of the first messages by the message transfer control means,
- third indicators (RLS) which are active to control the erasing of the saved messages by the message transfer control means,
- fourth indicators (XMIT) which are active to control the transmission of messages by the message transfer control means to the target module assigned to the set of indicators
- fifth indicators (EOM) which are active to control the saving of the messages waiting for acknowledgment by the transfer control means.

4. A mechanism according to claim 2 or 3 to be used in communication node wherein the messages transferred between the origin and target modules are of at least two types, the first type comprising information messages (I) and the second type comprising supervisory messages (RR, U, RNR), both types of messages having a control field (C), the control field of the information message comprising at least a value NS indicative of the sequence number of the message sent by an origin module to a target module and a value NR indicative of the sequence number of the next message expected by the origin module from the target module, and the supervisory messages only comprising a value NR, said mechanism being characterized in that the transmission protocol variables in each control block corresponding in a module i to a module j, comprises:
a first field (NS/NR) which is set at the communication node initialization by the microprocessor to a binary value which makes the message transfer control means able to detect or not the protocol errors in the message transfer between module i and module j,
a second field (VR) which is set by the message processing means to a value indicative of the number of the next message expected by said module i from module j,
a third field (VS) which is set by the message processing means to a value indicative of the number of the next information message send by module i to module j,
a fourth field (LNR) which is set by the message processing means to a value indicative of the number of the last valid message received by module i from module j.

5. A mechanism according to claim 4, characterized in that the message processing means comprise receive means (50-1), erasing means (50-2), transmit means (50-3) and end of message processing means (50-4) which are successively activated by the first and second transfer control signals during each period tj.

6. A mechanism according to claim 5, characterized in that the receive means (50-1, Figure 6) are activated by the first transfer control signals (104, 106) and are responsive to the first and second indicators to read a first message from the storing means and erase this message if the first indicators are representative of an erroneous transfer condition and if not, check the NS value from the C field of the message with respect to the value of the second field (VR), third field (VS) and fourth field (LNR),
firstly to determine whether the sequence number NS of said message is correct and if not correct, erase said message,
secondly to determine whether the sequence number NR of the message is correct and if not correct setting the first indicators to a value representative of an erroneous transfer condition and store a third message in the storing means, said third message signalling a protocol error (EVENT 0), or if said sequence number is correct, activate the third and fourth indicators,
and thirdly to update the control block relative to module j by incrementing the second field (VR) if the message is an information message with a correct sequence number NS and setting the fourth field (LNR) to the value of the second field (VR) if the NR value of the message is correct.

7. A mechanism according to claim 5 or 6 characterized in that the erasing means (50-2, figure 7) in the message processing means are activated by the first transfer control signals (104, 106) from the scheduling means when the third indicator is found active, to erase one second message which was saved in the storing means.

8. A mechanism according to claim 5, 6 or 7 characterized in that :
- the fourth indicators relative to any module j, comprise first bits (LOR,LOQ) indicative that the storing means comprise at least one second message for the module j and at least one second bit (ACK) which is activated by the receive means and
- the transmit means (50-2, figure 8) are activated by the second transfer control signals (108, 110, 112) and are responsive to the first indicator and to the first and second bits of the fourth indicator, and if the first indicator is not representative of an erroneous transfer condition, the transmit means read a second message from the storing means if the first bits and second bit of the fourth indicator are active and set the NR and NS value in the control field to the value of the second field (VR) and third field (VS) respectively and provide the message to the transmitting means or build a supervisory message (RR) and set the NR value in the control field to the value of the second field (VR) and provide said supervisory message to the transmitting means, if the first bits in the fourth indicator indicates that there is no second message in the storing means.

9. A mechanism according to claim 8, characterized in that the transmitting means generate an end of message signal when the transmission of one message to a module j is completed, said end of message signal setting the fifth indicator in the set of indicators relative to module j.

10. A mechanism according to claim 9, characterized in that the end of message processing means (50-4, figure 9) are activated by the second transfer control signals (110) when the fifth indicator is found active to save the transmitted message in the storing means.

11. Mechanism according to any one of claim 6 to 10 characterized in that the set of indicators comprises a sixth indicator (TO) which controls the message processing means in order said means detect that a transmitted message is acknowledged within a given period and if not, write a third message in the storing means to signal a protocol error to the microprocessor.

12. Mechanism according to claim 11, characterized in that the control block for each module j comprises a timer value (TS,TIM) which is set to a first value (0) each time a second message is read by the transmit means and the message transfer processing means comprise time out processing means (50-5, figure 10) which are activated under control of the second transfer control signals (112) after the end of message processing means have completed their operations when the sixth indicator is active to first deactivate said indicator and increment the timer value and detect whether said value is equal or higher to a second value (time out), and if yes, set the first indicators to their erroneous transfer conditions and write a third message (EVENT 3) in the storing means, said third message signalling a protocol error.

13. Mechanism according to any one of claim 6 to 12 characterized in that the error recovery procedure is initiated by the microprocessor in module i, when it receives a third message signalling protocol error from the storing means relative to a transfer between module i and any module j, and in response thereto the microprocessor in module i and the microprocessor in module j initiates an exchange of signalling messages between module i and module j including the transmission protocol variables in order to determine which saved second messages in the storing means are not acknowledged in module i and module j and set the first indicators in module i relative to module j and the first indicator in module j relative to module i to their normal condition in order the message processing means in the modules i and j transmit the not acknowledged messages again.

14. A mechanism according to any one of claim 1 to 13 characterized in that the storing means comprise:
a first storing means (10) which include:
- n inbound queues (LIQ-M), with one inbound queue assigned to one module for storing the first messages received by the receiving means from the assigned module,
- n outbound queues (LOQ-M) with one outbound queue assigned to one module for storing the second messages to be transmitted to the assigned module by the transmitting means
- n outstanding queues (LOS-M) with one outstanding queue assigned to one module for saving the second messages until they are acknowledged by the assigned module,
- at least one microcode inbound queue (MIQ) for storing the third messages,
a second storing means (66) for storing the n set of indicators.

15. A mechanism according to claim 14 characterized in that the first storing means comprise:
- n retry queues (LOR-M) with one retry queue assigned to one module for storing fourth messages which are transmitted by the transfer control means to the assigned module, said fourth messages comprising signalling messages from the microprocessor or not the acknowledged messages to be resent to the assigned module when the error recovery procedure is completed.

## Patentansprüche

1. Ein Mechanismus zum Ausführen der stationären Betriebszustandsfunktionen eines Übertragungsprotokolls, das die Nachrichten-Übertragungen zwischen Ausgangs- und Zielmodulen verwaltet, und zum Ausführen der Fehlerbeseitigungsfunktionen in einem Kommunikationsknoten, wobei eine Anzahl von Modulen n durch ein Übertragungsmittel (3) verbunden sind und wobei jedes Modul einen Mikroprozessor (16) umfaßt, der ein Steuerprogramm ausführt, empfangende und übertragende Mittel (8,14) zum Empfangen und Übertragen von Nachrichten von dem bzw. an das Übertragungsmittel, wobei der Mechanismus dadurch gekennzeichnet ist, daß er folgendes umfaßt:
in jedem Modul i, wobei i irgendeine Zahl zwischen 1 und n ist,
- Speichermittel (10, 66) zum Speichern von:
. ersten Nachrichten, die durch die empfangenden Mittel von irgendeinem Ausgangsmodul unter den n Modulen empfangen werden, zweiten Nachrichten, die durch das Modul zu irgendeinem Zielmodul unter den n Modulen zu übertragen sind, und Sichern der zweiten Nachrichten, bis sie von dem Zielmodul bestätigt werden, und dritten Nachrichten, die von dem Mikroprozessor verarbeitet werden;
. n Steuerblöcken (SCB), wobei ein Steuerblock einem Modul zugeordnet ist, um die Übertragungsprotokollvariablen bezüglich der Übertragung von Nachrichten zwischen dem Modul i und dem Modul, das dem Steuerblock zugeordnet ist, zu halten;
. n Gruppen von Anzeigern, wobei eine Gruppe einem Modul zugeordnet ist, jede Gruppe von Anzeigern stellt die Übertragungsbedingungen zwischen dem Modul i und dem zugeordneten Modul dar;
- Steuermittel zur Nachrichtenübertragung (50, 64), die auf die Übertragungsprotokollvariablen in dem Steuerblock und auf die Gruppe von Anzeigern bezüglich eines Moduls j reagieren, wobei j irgendeine Zahl zwischen 1 und n ist, um
. eine erste Nachricht zu lesen, die von Modul j von dem Speichermittel empfangen wird, falls vorhanden
. zu prüfen, ob die Nachricht eine gültige Bestätigung einer gesicherten zweiten Nachricht enthält, die auf Bestätigung wartet, und
falls ja, die gesicherte zweite Nachricht zu löschen, und eine Bestätigungsnachricht (I) aufzubauen und die Nachricht an Modul j zu übertragen, indem eine zweite Nachricht gelesen wird, die für Modul j in dem Speichermittel bestimmt ist, falls vorhanden, und Hinzufügen der Bestätigungsvariablen zu der Nachricht und Sichern der Bestätigungsnachricht (I), oder, falls es keine zweite Nachricht gibt, die für das Ausgangsmodul j bestimmt ist, eine Bestätigungsnachricht (RR) aufzubauen, die nur die Bestätigungsvariablen enthält,
falls nein, einen Protokollfehler an den Mikroprozessor durch Schreiben einer dritten Nachricht zu melden, die für den Mikroprozessor bestimmt ist, die dritte Nachricht meldet einen Protokollfehler, damit der Mikroprozessor die Fehlerbeseitigungsprozedur einleitet.

2. Mechanismus nach Anspruch 1, dadurch gekennzeichnet, daß das Steuermittel zur Nachrichtenübertragung in irgendeinem Modul i folgendes umfaßt:
Schedulermittel (64, 62, 70), welche das Speichermittel in aufeinanderfolgenden Zeitperioden tl bis tn einer Schedulerperiode T sequentiell adressieren, um während jeder Zeitperiode tj die Gruppe von Anzeigern und den dem Modul j zugeordneten Steuerblock zu lesen und daraus erste Übertragungssteuersignale (104, 106) zur Steuerung des Empfangs einer Nachricht von Modul j durch Modul i und der Übertragung einer Nachricht von Modul i zu Modul j zu erzeugen,
Nachrichtenverarbeitungsmittel (50), die auf die ersten (104, 106) und zweiten (108, 110, 112) Übertragungssteuersignale reagieren, um den Empfang einer Nachricht von Modul j durch Modul i und die Übertragung einer Nachricht an Modul j durch Modul i zu verarbeiten und dann den Steuerblock und die Gruppe von Anzeigern, die Modul j zugeordnet sind, zu aktualisieren.

3. Mechanismus nach Anspruch 2, dadurch gekennzeichnet, daß die Gruppe von Anzeigern für jedes Modul folgendes umfaßt:
- erste Anzeiger (L, R), die zur Darstellung normaler Übertragungsbedingungen oder fehlerhafter Übertragungsbedingungen auf verschiedene Werte gesetzt werden,
- zweite Anzeiger (LIQ), die aktiv sind, um die Lese-Operation der ersten Nachrichten durch das Steuermittel für die Nachrichtenübertragung zu steuern,
- dritte Anzeiger (RLS), die aktiv sind, um das Löschen der gesicherten Nachrichten durch das Steuermittel zur Nachrichtenübertragung zu steuern,
- vierte Anzeiger (XMIT), die aktiv sind, um die Übertragung von Nachrichten durch die Steuermittel zur Nachrichtenübertragung an das der Gruppe von Anzeigern zugeordneten Zielmodul zu steuern
- fünfte Anzeiger (EOM), die aktiv sind, um das Sichern der Nachrichten, die auf Bestätigung durch die Übertragungssteuermittel warten, zu steuern.

4. Ein Mechanismus nach Anspruch 2 oder 3, der in einem Kommunikationsknoten zu verwenden ist, wobei die Nachrichten, die zwischen den Ausgangs- und Zielmodulen übertragen werden, aus mindestens zwei Typen bestehen, wobei der erste Typ die Informationsnachrichten (I) und der zweite Typ die Supervisor-Nachrichten (RR, U, RNR) umfaßt, beide Nachrichtentypen haben ein Steuerfeld (C), das Steuerfeld der Informationsnachricht umfaßt mindestens einen Wert NS, der auf die Reihenfolgenummer der Nachricht hinweist, die durch ein Ausgangsmodul an ein Zielmodul gesendet wird, und einem Wert NR, der auf die Reihenfolgenummer der nächsten Nachricht hinweist, die durch das Ausgangsmodul von dem Zielmodul erwartet wird, und die Supervisor-Nachrichten nur einen Wert NR umfassen, der Mechanismus ist dadurch gekennzeichnet, daß die Übertragungsprotokollvariablen in jedem Steuerblock entsprechend in Modul i bis Modul j folgendes umfassen:
ein erstes Feld (NS/NR), das bei der Initialisierung des Kommunikationsknotens durch den Mikroprozessor auf einen binären Wert gesetzt wird, der das Steuermittel zur Nachrichtenübertragung in die Lage versetzt, die Protokollfehler in der Nachrichtenübertragung zwischen Modul i und Modul j festzustellen oder nicht,
ein zweites Feld (VR), das von dem Nachrichtenverarbeitungsmittel auf einen Wert gesetzt wird, der die Nummer der nächsten Nachricht anzeigt, die durch das Modul i von Modul j erwartet wird,
ein drittes Feld (VS), das von dem Nachrichtenverarbeitungsmittel auf einen Wert gesetzt wird, der auf die Nummer der nächsten Informationsnachricht hinweist, die vom Modul i an Modul j gesendet wird,
ein viertes Feld (LNR), das von dem Nachrichtenverarbeitungsmittel auf einen Wert gesetzt wird, der auf die Nummer der letzten gültigen Nachricht hinweist, die durch Modul i von Modul j empfangen wurde.

5. Ein Mechanismus nach Anspruch 4, dadurch gekennzeichnet, daß das Nachrichtenverarbeitungsmittel Empfangsmittel (50-1), Löschmittel (50-2), Übertragungsmittel (50-3) und Nachrichtenendeverarbeitungsmittel (50-4) umfaßt, die von den ersten und zweiten Übertragungssteuersignalen während jeder Periode tj nacheinander aktiviert werden.

6. Ein Mechanismus nach Anspruch 5, dadurch gekennzeichnet, daß die Empfangsmittel (50-1, Figur 6) von den ersten Übertragungssteuersignalen (104, 106) aktiviert werden und auf die ersten und zweiten Anzeiger reagieren, eine erste Nachricht von dem Speichermittel zu lesen und diese Nachricht zu löschen, falls die ersten Anzeiger einen fehlerhaften Übertragungszustand anzeigen und, falls nicht, den NS-Wert des C-Feldes der Nachricht hinsichtlich des Wertes des zweiten Feldes (VR), des dritten Feldes (VS) und des vierten Feldes (LNR) zu prüfen,
erstens um zu bestimmen, ob die Reihenfolgenummer NS der Nachricht richtig ist, und, falls sie nicht richtig ist, diese Nachricht zu löschen,
zweitens um zu bestimmen, ob die Reihenfolgenummer NR der Nachricht richtig ist, und, falls sie nicht richtig ist, die ersten Anzeiger auf einen Wert setzen, der eine fehlerhafte Übertragungsbedingung darstellt, und um eine dritte Nachricht in dem Speichermittel zu speichern, wobei die dritte Nachricht einen Protokollfehler (EVENT 0) meldet, oder, falls die Reihenfolgenummer korrekt ist, die dritten und vierten Anzeiger zu aktivieren,
und drittens um den Steuerblock bezüglich Modul j zu aktualisieren, indem das zweite Feld (VR) erhöht wird, falls die Nachricht eine Informationsnachricht mit einer korrekten Reihenfolgenummer NS ist, und das vierte Feld (LNR) auf den Wert des zweiten Feldes (VR) zu setzen, falls der NR-Wert der Nachricht korrekt ist.

7. Ein Mechanismus nach Anspruch 5 oder 6, dadurch gekennzeichnet, daß die Löschmittel (50-2, Figur 7) in dem Nachrichtenverarbeitungsmittel von den ersten Übertragungssteuersignalen (104, 106) von dem Schedulermittel aktiviert werden, wenn der dritte Anzeiger aktiv ist, um eine zweite Nachricht zu löschen, die in dem Speichermittel gesichert wurde.

8. Ein Mechanismus nach Anspruch 5, 6 oder 7, dadurch gekennzeichnet, daß:
- die vierten Anzeiger bezüglich irgendeines Moduls j erste Bits (LOR, LOQ) umfassen, die anzeigen, daß die Speichermittel mindestens eine zweite Nachricht für das Modul j und mindestens ein zweites Bit (ACK) umfassen, das von den Empfangsmitteln aktiviert wird, und
- die Übertragungsmittel (50-2, Figur 8) durch die zweiten Übertragungssteuersignale (108, 110, 112) aktiviert werden und auf den ersten Anzeiger und auf die ersten und zweiten Bits des vierten Anzeigers reagieren, und, falls der erste Anzeiger keine fehlerhafte Übertragungsbedingung darstellt, die Übertragungsmittel eine zweite Nachricht von dem Speichermittel lesen, falls die ersten Bits und das zweite Bit des vierten Anzeigers aktiv sind, und den NR- und NS-Wert in dem Steuerfeld auf den Wert des zweiten Feldes (VR) bzw. des dritten Feldes (VS) setzen und die Nachricht an das Übertragungsmittel liefern oder eine Supervisor-Nachricht (RR) aufbauen und den NR-Wert in dem Steuerfeld auf den Wert des zweiten Feldes (VR) setzen und die Supervisor-Nachricht an das Übertragungsmittel liefern, falls das erste Bit in dem vierten Anzeiger anzeigt, daß es in dem Speichermittel keine zweite Nachricht gibt.

9. Ein Mechanismus nach Anspruch 8, dadurch gekennzeichnet, daß das Übertragungsmittel ein Signal Ende der Nachricht erzeugt, wenn die Übertragung einer Nachricht an ein Modul j abgeschlossen ist, das Signal Ende der Nachricht setzt den fünften Anzeiger in der Gruppe von Anzeigern bezüglich Modul j.

10. Ein Mechanismus nach Anspruch 9, dadurch gekennzeichnet, daß das Verarbeitungsmittel für das Ende der Nachricht (50-4, Figur 9) von den zweiten Übertragungssteuersignalen (110) aktiviert wird, wenn der fünfte Anzeiger aktiv ist, um die übertragene Nachricht in dem Speichermittel zu sichern.

11. Mechanismus nach irgendeinem der Ansprüche 6 bis 10, dadurch gekennzeichnet, daß die Gruppe von Anzeigern einen sechsten Anzeiger (TO) umfaßt, der das Nachrichtenverarbeitungsmittel steuert, damit das Mittel feststellt, daß eine übertragene Nachricht innerhalb einer gegebenen Zeitperiode bestätigt wird und, falls nicht, eine dritte Nachricht in das Speichermittel schreibt, um einen Protokollfehler an den Mikroprozessor zu melden.

12. Mechanismus nach Anspruch 11, dadurch gekennzeichnet, daß der Steuerblock für jedes Modul j einen Zeitgeber-Wert (TS, TIM) enthält, der jedesmal auf einen ersten Wert (0) gesetzt wird, wenn eine zweite Nachricht von dem Übertragungsmittel gelesen wird, und das Verarbeitungsmittel zur Nachrichtenübertragung Verarbeitungsmittel zur Zeitlimit-Überschreitung (50-5, Figur 10) enthält, die unter Steuerung der zweiten Übertragungssteuersignale (112) aktiviert werden, nachdem die Verarbeitungsmittel für das Ende der Nachricht ihre Operationen abgeschlossen haben, wenn der sechste Anzeiger aktiv ist, um zuerst den Anzeiger zu deaktivieren und den Zeitgeberwert zu erhöhen und festzustellen, ob der Wert gleich oder größer einem zweiten Wert (Zeitlimit-Überschreitung) ist, und, falls ja, die ersten Anzeiger auf ihre fehlerhaften Übertragungsbedingungen setzen und eine dritte Nachricht (EVENT 3) in das Speichermittel schreiben, wobei die dritte Nachricht einen Protokollfehler meldet.

13. Mechanismus nach irgendeinem der Ansprüche 6 bis 12, dadurch gekennzeichnet, daß die Fehlerbeseitigungsprozedur von dem Mikroprozessor in Modul i eingeleitet wird, wenn er eine dritte Nachricht empfängt, die einen Protokollfehler von dem Speichermittel bezüglich einer Übertragung zwischen Modul i und irgendeinem Modul j meldet, und als Antwort darauf der Mikroprozessor in Modul i und der Mikroprozessor in Modul j einen Austausch der Signalnachrichten zwischen Modul i und Modul j einschließlich der Übertragungsprotokollvariablen einleitet, um zu bestimmen, welche gesicherten zweiten Nachrichten in dem Speichermittel in Modul i und Modul j nicht bestätigt sind, und den ersten Anzeiger in Modul i bezüglich Modul j und den ersten Anzeiger in Modul j bezüglich Modul i auf ihren normalen Status setzen, damit die Nachrichtenverarbeitungsmittel in den Modulen i und j die nicht bestätigten Nachrichten nochmals übertragen.

14. Ein Mechanismus nach irgendeinem der Ansprüche 1 bis 13, dadurch gekennzeichnet, daß das Speichermittel folgendes umfaßt:
ein erstes Speichermittel (10), das folgendes umfaßt:
- n Eingangswarteschlangen (LIQ-M), wobei eine Eingangswarteschlange einem Modul zum Speichern der ersten Nachrichten zugeordnet ist, die von dem Empfangsmittel des zugeordneten Moduls empfangen werden,
- n Ausgangswarteschlangen (LOQ-M), wobei eine Ausgangswarteschlange einem Modul zum Speichern der zweiten Nachrichten zugeordnet ist, die von dem Übertragungsmittel an das zugeordnete Modul zu übertragen sind,
- n ausstehende Warteschlangen (LOS-M), wobei eine ausstehende Warteschlange einem Modul zum Sichern der zweiten Nachrichten zugeordnet ist, bis sie von dem zugeordneten Modul bestätigt werden,
- mindestens eine Mikrocode-Eingangswarteschlange (MIQ) zum Speichern der dritten Nachrichten,
ein zweites Speichermittel (66) zum Speichern der n Gruppen von Anzeigern.

15. Ein Mechanismus nach Anspruch 14, dadurch gekennzeichnet, daß das erste Speichermittel folgendes umfaßt:
- n Wiederholungswarteschlangen (LOR-M), wobei eine Wiederholungswarteschlange einem Modul zum Speichern vierter Nachrichten zugeordnet ist, die von dem Übertragungssteuermittel an das zugeordnete Modul übertragen werden, die vierten Nachrichten umfassen Signalnachrichten von dem Mikroprozessor, ob die bestätigten Nachrichten an das zugeordnete Modul zurückzusenden sind oder nicht, wenn die Fehlerbeseitigungsprozedur abgeschlossen ist.

## Revendications

1. Mécanisme pour réaliser les fonctions d'état stationnaire d'un protocole de transmission gérant les transferts de messages entre des modules d'origine et cibles et réalisant des fonctions de rétablissement d'erreurs, dans un noeud de communication où un nombre n de modules sont connectés par un moyen de communication (3) et dans lequel chaque module comporte un microprocesseur (16) faisant tourner un programme de commande des moyens (8, 14) de réception et de transmission pour recevoir et transmettre des messages en provenance et vers le moyen de communication respectivement, ledit mécanisme étant caractérisé en ce qu'il comprend:
dans chaque module i, i étant tout nombre compris entre 1 et n,
- des moyens de stockage (10, 66) pour stocker:
. des premiers messages reçus par le moyen de réception à partir de tout module d'origine parmi les n modules, des secondes messages à transmettre par ledit module vers tout module cible parmi les n modules et sauvegardant lesdits seconds messages jusqu'à ce qu'ils soient reconnus par le module cible, et des troisièmes messages qui sont traités par le microprocesseur;
. n blocs de commande (SCB) avec un bloc de commande assigné à un module, pour contenir les variables du protocole de transmission par rapport au transfert de messages entre le module i et le module assigné au bloc de commande;
. n séries d'indicateurs avec une série assignée à un module, chaque série d'indicateurs étant représentative des conditions de transfert entre le module i et le module assigné;
- des moyens (50, 64) de commande de transfert de messages qui sont sensibles aux variables du protocole de transmission dans le bloc de commande et à la série d'indicateurs par rapport à un module j, j étant tout nombre compris entre 1 et n, pour,
. lire un premier message reçu en provenance du module j à partir du moyen de stockage, s'il existe
. contrôler si ledit message contient une reconnaissance valide d'un second message sauvegardé attendant la reconnaissance, et
si oui, l'effacement du second message sauvegardé, et la réalisation d'un message de reconnaissance (I) et la transmission dudit message au module j, en lisant un second message destiné au module j dans le moyen de stockage, s'il existe, et l'addition de variables de reconnaissance audit message et la sauvegarde dudit message de reconnaissance (I) ou s'il n'y a pas de second message destiné au module d'origine j la réalisation d'un message de reconnaissance (RR) contenant uniquement les variables de reconnaissance,
sinon, la signalisation d'une erreur de protocole au microprocesseur en écrivant un troisième message destiné au microprocesseur, ledit troisième message signalant une erreur de protocole, afin que le microprocesseur amorce la procédure de rétablissement d'erreur.

2. Mécanisme selon la revendication 1 caractérisé en ce que le moyen de commande de transfert de messages dans tout module i, comporte:
des moyens de programmation (64, 62, 70) qui adressent séquentiellement les moyens de stockage au cours de périodes de temps successives t1 à tn d'une période de programmation T pour lire au cours de chaque période tj, la série d'indicateurs et le bloc de commande assigné au module j et généré à partir de celui-ci des premiers signaux de commande de transfert (104, 106) pour commander la réception d'un message entre le module j et le module i et la transmission d'un message entre le module i et le module j,
des moyens (50) de traitement de message qui sont sensibles aux premiers (104, 106), et seconds (108, 110, 112) signaux de commande de transfert pour traiter la réception d'un message à partir du module j par le module i et la transmission d'un message au module j par le module i puis pour mettre à jour le bloc de commande et la série d'indicateurs assignée au module j.

3. Mécanisme selon la revendication 2 caractérisé en ce que la série d'indicateurs pour chaque module comprend:
- des premiers indicateurs (L, R) qui sont établis à différentes valeurs représentatives de conditions de transfert normales ou de conditions de transfert erronées,
- des seconds indicateurs (LIQ) qui sont actifs pour commander l'opération de lecture des premiers messages par le moyen de commande de transfert de messages,
- des troisièmes indicateurs (RLS) qui sont actifs pour la commande de l'effacement des messages sauvegardés par le moyen de commande de transfert de messages,
- des quatrièmes indicateurs (XMIT) qui sont actifs pour commander la transmission de messages par le moyen de commande de transfert de messages au module cible assigné à la série d'indicateurs
- des cinquièmes indicateurs (EOM) qui sont actifs por commander la sauvegarde des messages attendant la reconnaissance par le moyen de commande de transfert.

4. Mécanisme selon la revendication 2 ou 3 à utiliser dans un noeud de communication dans lequel les messages transférés entre les mcdules d'origine et cible sont d'au moins deux types,, le premier type comprenant des messages d'information (I) et le second type comprenant des messages de supervision (RR, U, RNR), les deux types de messages ayant champ de commande (C), le champ de commande du message d'information comprenant au moins une valeur NS indicatrice du numéro de séquence du message envoyé par un module d'origine vers un module cible et une valeur NR indicatrice du numéro de séquence du message suivant attendu par le module d'origine à partir du module cible, et les messages de supervision comprenant uniquement une valeur NR, ledit mécanisme étant caractérisé en ce que les variables du protocole de transmission dans chaque bloc de commande correspondant dans un module i vers un module j, comporte:
un premier champ (NS/NR) qui est établi à l'initialisaticn du noeud de communication par le microprocesseur à une valeur binaire qui rend le moyen de commande de transfert de messages capable de détecter ou non les erreurs de protocole dans le transfert de messages entre le module i et le module j,
un second champ (VR) qui est établi par le moyen de traitement de messages à une valeur indicatrice du numéro du message suivant attendu par ledit module i à partir du module j,
un troisième champ (VS) qui est établi par le moyen de traitement de messages à une valeur indicatrice du numéro du message d'information suivant envoyé par le module i au module j,
un quatrième champ (LNR) qui est établi par le moyen de traitement de messages à une valeur indicatrice du numéro du dernier message valide reçu par le module i à partir du module j.

5. Mécanisme selon la revendication 4, caractérisé en ce que le moyen de traitement de messages comporte des moyens de réception (50-1), des moyens d'effacement (50-2), des moyens de transmission (50-3) et des moyens (50-4) de traitement de fin de message qui sont successivement activés par les premiers et seconds signaux de commande de transfert au cours de chaque période tj.

6. Mécanisme selon la revendication 5, caractérisé en ce que les moyens de réception (50-1, figure 6) sont activés par les premiers signaux de commande de transfert (104, 106) et sont sensibles aux premiers et seconds indicateurs pour lire un premier message à partir du moyen de stockage et pour effacer ce message si les premiers indicateurs sont représentatifs d'une condition de transfert erronée et sinon, contrôler la valeur NS à partir du champ C du message par rapport à la valeur du second champ (VR), du troisième champ (VS) et du quatrième champ (LNR),
premièrement pour déterminer si le numéro de séquence NS dudit message est correct et s'il n'est pas correct, effacer ledit message,
deuxièmement pour déterminer si le numéro de séquence NR du message est correct et s'il n'est pas correct pour établir les premiers indicateurs à une valeur représentative d'une condition de transfert erronée et stocker un troisième message dans le moyen de stockage, ledit troisième message signalant une erreur de protocole (EVENT 0), ou si ledit numéro de séquence est correct, activer les troisième et quatrième indicateurs,
et troisièmement pour mettre à jour le bloc de commande par rapport au module j en incrémentant le second champ (VR) si le message est un message d'information avec un numéro de séquence correct NS et en établissant le quatrième champ (LNR) à la valeur du second champ (VR) si la valeur NR du message est correcte.

7. Mécanisme selon la revendication 5 ou 6 caractérisé en ce que les moyens d'effacement (50-2, figure 7) dans le moyen de traitement de messages sont activés par les premiers signaux de commande de transfert (104, 106) à partir du moyen de programmation lorsque le troisième indicateur est trouvé actif, afin d'effacer un second message qui a été sauvegardé dans le moyen de stockage.

8. Mécanisme selon la revendication 5, 6 ou 7 caractérisé en ce que:
- les quatrièmes indicateurs relatifs à tout module j, comportent des premiers bits (LOR, LOQ) indicatifs du fait que le moyen de stockage comporte au moins un second message pour le module j et au moins un second bit (ACK) qui est activé par le moyen de réception et
- les moyens de transmission (50-2, figure 8) sont activés par les seconds signaux de commande de transfert (108, 110, 112) et sont sensibles au premier indicateur et aux premiers et seconds bits du quatrième indicateur, et si le premier indicateur n'est pas représentatif d'une condition de transfert erronée, les moyens de transmission lisent un second message à partir du moyen de stockage si les premiers bits et le second bit du quatrième indicateur sont actifs et établissent la valeur NR et NS dans le champ de commande à la valeur du second champ (VR) et du troisième champ (VS) respectivement et fournissent le message aux moyens de transmission ou réalisent un message de supervision (RR) et établissent la valeur NR dans le champ de commande à la valeur du second champ (VR) et fournissent ledit message de supervision aux moyens de transmission, si les premiers bits dans le quatrième indicateur indiquent qu'il n'y a pas de second message dans le moyen de stockage.

9. Mécanisme selon la revendication 8, caractérisé en ce que les moyens de transmission génèrent un signal de fin de message lorsque la transmission d'un message à un module j est terminée, ledit signal de fin de message établissant le cinquième indicateur dans la série d'indicateurs par rapport au module j.

10. Mécanisme selon la revendication 9, caractérisé en ce que les moyens de traitement de fin de message (50-4, figure 9) sont activés par les seconds signaux de commande de transfert (110) lorsque le cinquième indicateur est trouvé actif pour sauvegarder le message transmis dans le moyen de stockage.

11. Mécanisme selon l'une quelconque des revendications 6 à 10 caractérisé en ce que la série d'indicateurs comporte un sixième indicateur (TO) qui commande les moyens de traitement de messages afin que lesdits moyens détectent qu'un message transmis est reconnu à l'intérieur d'une période donnée et sinon, écrivent un troisième message dans le moyen de stockage pour signaler une erreur de protocole au microprocesseur.

12. Mécanisme selon la revendication 11, caractérisé en ce que le bloc de commande pour chaque module j comporte une valeur de minuteur (TS, TIM) qui est établie à une première valeur (0) chaque fois qu'un second message est lu par les moyens de transmission et les moyens de traitement de transfert de messages comportent des moyens de traitement de désynchronisation (50-5, figure 10) qui sont activés sous la commande des seconds signaux de commande de transfert (112) après que les moyens de traitement de fin de message ont terminé leurs opérations lorsque le sixième indicateur est actif pour désactiver tout d'abord ledit indicateur et incrémenter la valeur de minuteur et détecter si ladite valeur est égale ou supérieure à une seconde valeur (désynchronisation), et si oui, établir les premiers indicateurs à leurs conditions de transfert erronées et écrire un troisième message (EVENT 3) dans le moyen de stockage, ledit troisième message signalent une erreur de protocole.

13. Mécanisme selon l'une quelconque des revendications 6 à 10 caractérisé en ce que la procédure de rétablissement d'erreur est initiée par le microprocesseur dans le module i, lorsqu'il reçoit un troisième message signalant une erreur de protocole à partir du moyen de stockage relative à un transfert entre le module i et tout module j, et en réponse à ceci le microprocesseur dans le module i et le microprocesseur dans le module j amorce un échange de messages de signalisation entre le module i et le module j comportant les variables de protocole de transmission afin de déterminer ceux des seconds messages sauvegardés dans le moyen de stockage qui ne sont pas reconnus dans le module i et le module j et établir les premiers indicateurs dans le module i par rapport au module j et le premier indicateur dans le module j par rapport au module i à leur condition normale afin que les moyens de traitement de messages dans les modules i et j transmettent à nouveau les messages non reconnus.

14. Mécanisme selon l'une quelconque des revendications 1 à 13 caractérisé en ce que le moyen de stockage comporte:
un premier moyen de stockage (10) qui comporte;
- n files d'attentes reliées (LIQ-M), avec une file d'attente reliée assignée à un module pour stocker les premiers messages reçus par les moyens de réception à partir du module assigné,
- n files d'attentes non reliées (LOQ-M) avec une file d'attente non reliée assignée à un module pour stocker les seconds messages à transmettre au module assigné par les moyens de transmission
- n files d'attentes importantes (LOS-M) avec une file d'attente importante assignée à un module pour sauvegarder les seconds messages jusqu'à ce qu'ils soient reconnus par le module assigné,
- au moins une file d'attente reliée à microcode (MIQ) pour stocker les troisièmes messages,
un second moyen de stockage (66) pour stocker les n séries d'indicateurs.

15. Mécanisme selon la revendication 14 caractérisé en ce que le premier moyen de stockage comporte:
- n files d'attente de nouvelle tentative -LOR-M) avec une file d'attente de nouvelle tentative assignée à un module pour stocker les quatrièmes messages qui sont transmis par les moyens de commande de transfert au module assigné, lesdits quatrièmes messages comprenant des messages de signalisation en provenance du microprocesseur ou non les messages reconnus à renvoyer au module assigné lorsque la procédure de rétablissement d'erreur est terminée.
